# EUROPEAN PATENT SPECIFICATION

(11) **EP 2 993 004 B1**
(45) Date of publication and mention of the grant of the patent: **26.12.2018**
(21) Application number: 14791353.7
(22) Date of filing: 30.04.2014
(51) Int. Cl.: B27M 1/00, B23C 3/12

(54) **DECORATIVE-MATERIAL TRIMMING DEVICE, AND COATED-ARTICLE PRODUCTION DEVICE AND PRODUCTION METHOD**
TRIMMVORRICHTUNG FÜR DEKORMATERIAL UND VORRICHTUNG ZUR HERSTELLUNG EINES BESCHICHTETEN ARTIKELS UND HERSTELLUNGSVERFAHREN
DISPOSITIF D'ÉBAVURAGE POUR BOIS RABOTÉ, ET DISPOSITIF DE FABRICATION AINSI QUE DE FABRICATION D'ARTICLE REVÊTU

(30) Priority: 02.05.2013 JP 2013097106; 05.09.2013 JP 2013184434
(43) Date of publication of application: 09.03.2016
(73) Proprietor: KATOMOKUZAI KOGYO CO., LTD, Aichi 486-0902 (JP)
(72) Inventor: KATO Hisaya, Kasugai-shi Aichi 486-0909 (JP)
(74) Representative: TBK
(86) International application number: PCT/JP2014/062021
(87) International publication number: WO 2014/178413

(56) References cited:
- EP-A1- 1 764 198
- EP-A1- 2 191 948
- EP-A1- 2 392 438
- EP-A2- 1 050 389
- JP-A- H02 224 910
- JP-A- 2010 208 269
- JP-A- 2011 152 640
- JP-U- H0 294 017

## Description

The present invention relates to a decorative-material trimming device according to the preamble of claim 1, and a coated-article production method according to the claim 6. Such a device is known from the document EP2191948A1. Such a method is partly known from the same document EP2191948A1.

### BACKGROUND ART

Hitherto, a decorative-material trimming device (also referred to as a "round trimming device") is generally known which performs a chamfering process by removing an extra end of a decorative material bonded to an end surface of a base material (for example, see JP 2010-208269 A). For example, as illustrated in Fig. 45, the trimming device includes a trimming head 241 which moves along an extra end of a decorative material 209, and the trimming head 241 includes a drive motor 247, a rotary cutter 248 which is connected to a drive shaft 247a of the drive motor 247 and removes an extra end of the decorative material 209, and a guide portion 252 (for example, an outer race of a bearing) which rolls on a base material 208 while being rotatably supported by a bracket 249 provided in a body 241a of the trimming head 241.

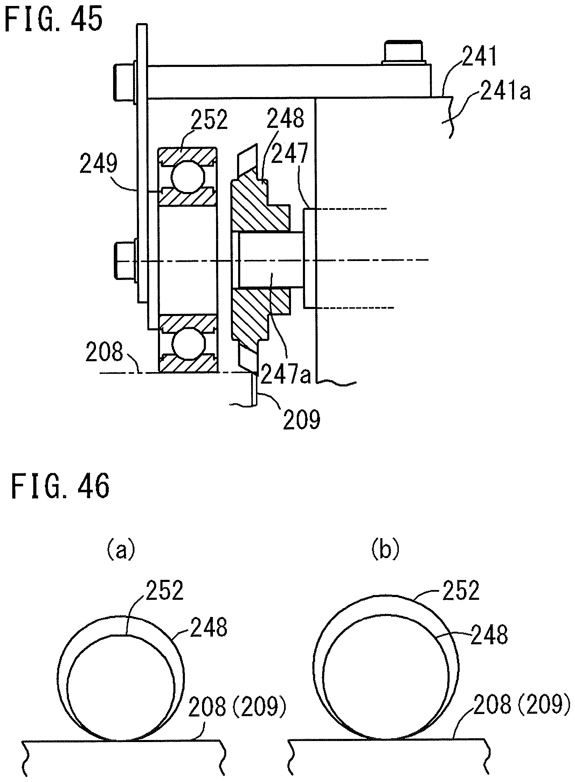

However, in the decorative-material trimming device of the related art, since the guide portion 252 is rotatably supported by the bracket 249 provided in the body 241a of the trimming head 241, the axis of the guide portion 252 is not easily positioned to the axis of the rotary cutter 248, and the tracing deviation of the guide portion 252 with respect to the base material 208 easily occurs. As a result, for example, as illustrated in Fig. 46(a), when the outer diameter of the guide portion 252 is smaller than the tip outer diameter of the rotary cutter 248, the tip of the rotary cutter 248 deeply intrudes into the decorative material 209. Further, for example, as illustrated in Fig. 46(b), when the outer diameter of the guide portion 252 is larger than the tip outer diameter of the rotary cutter 248, the tip of the rotary cutter 248 shallowly intrudes into the decorative material 209, and hence the extra end is left.

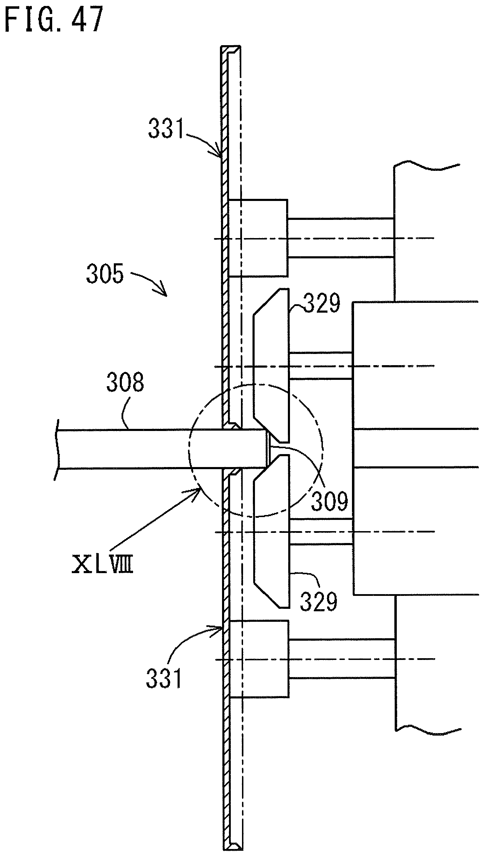

Further, a coated-article production device (also referred to as an "edge binder") is generally known which produces a coated article by bonding a decorative material to an end surface of a base material (for example, see JP H08-090504 A). The coated-article production device employs a trimming device which removes an extra portion in the longitudinal direction of the decorative material bonded to the end surface of the base material. For example, as illustrated in Fig. 47, a trimming device 305 includes a guide roller 331 which guides a front surface of a base material 308 conveyed in a predetermined conveying direction and a rotatable trimming cutter 329 which removes a longitudinal extra end at upper and lower edges of a decorative material 309 bonded to the base material 308 guided by the guide roller 331. Then, the trimming cutter 329 is disposed so as to remove the longitudinal extra portion of the decorative material 309 while being separated from the guide roller 331 in the horizontal width direction of the base material 308.

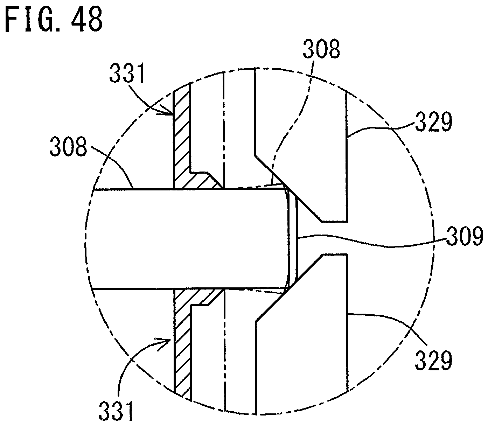

However, in the trimming device 305 of the related art, the trimming cutter 329 is disposed so as to remove the longitudinal extra portion of the decorative material 309 while being separated from the guide roller 331 in the horizontal width direction of the base material 308. Accordingly, the guide roller 331 guides an inner front surface portion separated from the front surface edge of the base material 308 (that is, the front surface edge portion of the base material). For that reason, when a load applied to the base material 308 increases due to the long term use of the trimming cutter 329, the end of the base material 308 is easily deformed so as to be curled back, for example, as indicated by the imaginary line of Fig. 48. When such a deformation occurs, the longitudinal extra portion of the decorative material 309 cannot be removed with high precision.

Further, there is a case where a protection film is stuck to the front surface of the base material in order to protect the front surface. In the trimming device of the related art, the front surface edge of the protection film is floated from the front surface of the base material due to the influence of a wind pressure or the like when the longitudinal extra portion of the decorative material is removed, and hence foreign materials such as cut chips intrude into a gap between the front surface of the base material and the protection film. As a result, the appearance of the coated article becomes poor.

EP 2 191 948 A1 shows a generic decorative-material trimming device according to the preamble of claim 1 for performing a chamfering process by removing an extra end of a decorative material bonded to an end surface of a base material, comprising a trimming head moving along the extra end of the decorative material, wherein the trimming head includes a drive motor, a rotary cutter connected to a drive shaft of the drive motor and removing the extra end of the decorative material, an attachment member attached to the axis of the rotary cutter, and a guide portion rolling on the base material while being supported by the attachment member so as to be rotatable about the axis of the rotary cutter.

EP 1 050 389 A2 shows a method for performing different chip forming operations on a workpiece using only one chip forming tool, which method uses a machining tool which is provided in two parts, one of which is used for machining a first sect of the workpiece, using a sensor for detecting the workpiece surface, before machining a second section of the workpiece, using the sensor for tracking a second workpiece surface. The machining tool is offset by a defined distance from the workpiece upon changing from one workpiece surface to the next, so that a second tool part is used for the second machining operation.

EP 2 392 438 A1 shows a processing device which comprises a tool arrangement, which has a tool that is acting on a workpiece, and a contact unit with a contact roller, which is rotatably stored around its rotary axis adjacent to the tool and controlling the position of the tool relative to the workpiece. The contact roller is supported by an actuating arrangement.

EP 1 764 198 A1 shows a process and apparatus for machining panel-shaped workpieces. Here, board-shaped workpieces to be treated are made of wood, wooden material or similar and coated with an abrasive layer. At least one groove is made on the workpieces where the abrasive coating is. The surface sections of the workpieces are pulled off where the abrasive layer is. The pulling off is done after making the groove and the surface section to be pulled off borders at least one of the grooves. The groove has a depth greater than or the same as the thickness of the abrasive layer. A treatment device has an appliance to make the groove, one to pull off the abrasive layer and to convey the workpiece from one appliance to another.

### SUMMMARY OF THE INVENTION

It is the object of the present invention to further develop a generic decorative-material trimming device according to the preamble of claim 1 such that a position adjustment of a trimming head of the decorative-material trimming device is improved during operation.

The object of the present invention is achieved by a decorative-material trimming device having the features of claim 1.

Further advantageous developments according to the present invention are defined in the dependent claims. In particular, a coated-article production device and a coated-article production method comprising and using a decorative-material trimming device according to the present invention are shown in claims 3 and 6, respectively.

According to an advantage of the present invention, a decorative-material trimming device, a coated-article production device, and a coated-article production method capable of performing a chamfering process by precisely removing an extra end of a decorative material while suppressing the tracing deviation of a guide portion with respect to a base material are provided. Further, according to another advantage of the present invention, a coated-article production device capable of highly precisely removing a longitudinal extra portion of a decorative material is provided.

According to an aspect of the invention, a decorative-material trimming device for performing a chamfering process by removing an extra end of a decorative material bonded to an end surface of a base material is provided, which device comprises: a trimming head moving along the extra end of the decorative material, wherein the trimming head includes a drive motor, a rotary cutter connected to a drive shaft of the drive motor and removing the extra end of the decorative material, an attachment member attached to the axis of the rotary cutter, and a guide portion rolling on the base material while being supported by the attachment member so as to be rotatable about the axis of the rotary cutter. The trimming head includes an adjustable press-contact piece coming into press-contact with an outer peripheral surface of the guide portion such that the position of the press-contact piece is adjusted with respect to the outer peripheral surface of the guide portion.

Preferably, the rotary cutter includes a blade tip for feeding cut chips toward the outside of a decorative surface of the decorative material.

Preferably, a coated-article production device for producing a coated article by bonding a decorative material to an end surface of a base material is provided, which device comprises: a decorative material bonding device bonding the decorative material to the end surface of the base material; and the decorative-material trimming device according to the present invention.

Preferably, the coated-article production device further comprises: another decorative-material trimming device removing a longitudinal extra end of the decorative material bonded to the end surface of the base material, wherein the another decorative-material trimming device includes a guide roller guiding a front surface edge of the base material conveyed in a predetermined conveying direction, and a rotatable trimming cutter removing the longitudinal extra end of the decorative material bonded to the end surface of the base material in case the front surface edge of the base material is guided by the guide roller, and wherein the guide roller includes a disk portion and a flange portion extending in a cylindrical shape from the outer periphery of the disk portion and guiding the front surface edge of the base material, and the trimming cutter is disposed so as to remove the longitudinal extra end of the decorative material while a part thereof is located inside the flange portion.

Preferably, in the coated-article production device, a protection film is stuck to a front surface of the base material.

Preferably, a coated-article production method of producing a coated article by bonding a decorative material to an end surface of a base material is provided, which method comprises: a decorative material bonding step of bonding the decorative material to the end surface of the base material; and a decorative material trimming step of performing a chamfering process by removing an extra end of the decorative material bonded to the end surface of the base material using the decorative-material trimming device according to the present invention.

### ADVANTAGEOUS EFFECTS OF INVENTION

According to a decorative-material trimming device of the invention, the decorative-material trimming device includes a trimming head which moves along the extra end of the decorative material, and the trimming head includes a drive motor, a rotary cutter which is connected to a drive shaft of the drive motor and removes the extra end of the decorative material, an attachment member which is attached to the axis of the rotary cutter, and a guide portion which rolls on a base material while being supported by the attachment member so as to be rotatable about the axis of the rotary cutter. Accordingly, the decorative material is chamfered in such a manner that the rotary cutter removes the extra end of the decorative material while the guide portion rolls on the base material when the trimming head moves along the extra end of the decorative material. Then, since the guide portion is supported by the attachment member attached to the rotary cutter so as to be rotatable about the axis of the rotary cutter, the axis of the guide portion is precisely positioned to the axis of the rotary cutter. As a result, the extra end of the decorative material can be precisely removed to be chamfered while the tracing deviation of the guide portion with respect to the base material is suppressed.

Further, since the trimming head includes the press-contact piece which comes into press-contact with the outer peripheral surface of the guide portion, since the press-contact piece comes into press-contact with the outer peripheral surface of the guide portion, it is possible to prevent the co-rotation of the guide portion with the rotary cutter and to prevent foreign materials such as cut chips from adhering to the outer peripheral surface of the guide portion.

Further, when the rotary cutter includes the blade tip (reverse lead blade tip) which feeds cut chips toward the outside of the decorative surface of the decorative material, it is possible to easily remove the adhesive protruding toward the rear surface of the decorative material and to suppress the generation of burr when the rotary cutter removes the extra end of the decorative material.

According to the coated-article production device of the invention, since the decorative-material trimming device is provided, the decorative material is chamfered in such a manner that the rotary cutter removes the extra end of the decorative material while the guide portion rolls on the base material when the trimming head moves along the extra end of the decorative material. Then, since the guide portion is supported by the attachment member attached to the rotary cutter so as to be rotatable about the axis of the rotary cutter, the axis of the guide portion is precisely positioned to the axis of the rotary cutter. As a result, the extra end of the decorative material can be precisely removed to be chamfered while the tracing deviation of the guide portion with respect to the base material is suppressed. Thus, a suitable coated article can be obtained.

Further, another decorative-material trimming device is provided which removes the longitudinal extra end of the decorative material bonded to the end surface of the base material. Here, the another decorative-material trimming device includes a specific guide roller and a specific trimming cutter, the guide roller includes a disk portion and a flange portion extending in a cylindrical shape toward the outer periphery of the disk portion and guiding the front surface edge of the base material, and the trimming cutter is disposed so as to remove the longitudinal extra end of the decorative material while a part thereof is located inside the flange portion. In this case, the extra portion of the decorative material is removed by the trimming cutter while the front surface edge of the base material (that is, the front surface edge portion of the base material) is guided by the guide roller. For that reason, the base material is not easily deformed even when a load applied to the base material increases due to the long term use of the trimming cutter. Thus, the longitudinal extra portion of the decorative material can be highly precisely removed.

Further, when the protection film is stuck to the front surface of the base material, the longitudinal extra portion of the decorative material can be removed while the floating of the protection film is suppressed.

According to the coated-article production method of the invention, since the decorative-material trimming device is used, the decorative material is chamfered in such a manner that the rotary cutter removes the extra end of the decorative material while the guide portion rolls on the base material when the trimming head moves along the extra end of the decorative material. Then, since the guide portion is supported by the attachment member attached to the rotary cutter so as to be rotatable about the axis of the rotary cutter, the axis of the guide portion is precisely positioned to the axis of the rotary cutter. As a result, the extra end of the decorative material can be precisely removed to be chamfered while the tracing deviation of the guide portion with respect to the base material is suppressed. Thus, a suitable coated article can be obtained.

### BRIEF DESCRIPTION OF DRAWINGS

The invention will be described in more detail in the detailed description below by exemplifying the typical non-limiting embodiments of the invention with reference to the drawings, but the same reference numerals indicate the same components throughout several drawings.
Fig. 1 is a side view of a coated-article production device according to a first embodiment.
Fig. 2 is a perspective view of a decorative material bonding device according to the first embodiment.
Fig. 3 is a top view of the decorative material bonding device.
Fig. 4 is an enlarged cross-sectional view taken along the line IV-IV of Fig. 3.
Fig. 5 is an enlarged cross-sectional view taken along the line V-V of Fig. 3.
Fig. 6 is a diagram when viewed from VI of Fig. 4.
Fig. 7 is a perspective view of an end cut unit according to the first embodiment.
Fig. 8 is a perspective view of a trimming unit according to the first embodiment.
Fig. 9 is an operation explanatory diagram of the trimming unit.
Fig. 10 is a perspective view of a decorative-material trimming device according to the first embodiment.
Fig. 11 is a side view of the decorative-material trimming device.
Fig. 12 is a main cross-sectional view of the decorative-material trimming device.
Fig. 13 is a diagram when viewed from XIII of Fig. 12.
Fig. 14 is an operation explanatory diagram of the decorative-material trimming device.
Fig. 15 is a main enlarged view of Fig. 14.
Fig. 16 is an explanatory diagram illustrating a blade tip (a reverse lead) of a rotary cutter according to the first embodiment.
Fig. 17 is an explanatory diagram illustrating a decorative-material trimming device according to another embodiment.
Fig. 18 is an explanatory diagram illustrating a blade tip (a normal lead) of a rotary cutter according to another embodiment.
Fig. 19 is an explanatory diagram illustrating a decorative material bonding device according to another embodiment.
Fig. 20 is a side view of a coated-article production device according to a second embodiment.
Fig. 21 is a perspective view of a base material milling device according to the second embodiment.
Fig. 22 is a front view of the base material milling device, where Fig. 22(a) illustrates a state where an end surface of a base material is cut and Fig. 22(b) illustrates a state where the base material contacts a pressing member.
Fig. 23 is a cross-sectional view taken along the line XXIII-XXIII of Fig. 22.
Fig. 24 is a cross-sectional view taken along the line XXIV-XXIV of Fig. 22, where Fig. 24(a) illustrates a state where the end surface of the base material is cut and Fig. 24(b) illustrates a state (a standby state) where the end surface of the base material is not cut.
Fig. 25 is a perspective view of a decorative material bonding device according to the second embodiment.
Fig. 26 is a top view of the decorative material bonding device.
Fig. 27 is an enlarged cross-sectional view taken along the line XXVII-XXVII of Fig. 26.
Fig. 28 is an enlarged cross-sectional view taken along the line XXVIII-XXVIII of Fig. 26.
Fig. 29 is a diagram when viewed from XXIX of Fig. 27.
Fig. 30 is a perspective view of a decorative material end cut device according to the second embodiment.
Fig. 31 is a perspective view of a first decorative-material trimming device according to the second embodiment.
Fig. 32 is a side view of the first decorative-material trimming device.
Fig. 33 is an enlarged view when viewed from XXXIII of Fig. 32.
Fig. 34 is an operation explanatory diagram of the first decorative-material trimming device.
Fig. 35 is a perspective view of a second decorative-material trimming device according to the second embodiment.
Fig. 36 is a side view of the second decorative-material trimming device.
Fig. 37 is a main cross-sectional view of the second decorative-material trimming device.
Fig. 38 is a diagram when viewed from XXXVIII of Fig. 37.
Fig. 39 is an operation explanatory diagram of the second decorative-material trimming device.
Fig. 40 is a main enlarged view of Fig. 39.
Fig. 41 is an explanatory diagram illustrating a blade tip (a reverse lead) of a trimming cutter according to the second embodiment.
Fig. 42 is an explanatory diagram illustrating a second decorative-material trimming device according to another embodiment.
Fig. 43 is an explanatory diagram illustrating a blade tip (a normal lead) of a trimming cutter according to another embodiment.
Fig. 44 is an explanatory diagram illustrating a decorative material bonding device according to another embodiment.
Fig. 45 is an explanatory diagram illustrating a decorative-material trimming device of the related art.
Fig. 46 is an explanatory diagram illustrating a decorative-material trimming device of the related art, where Fig. 46(a) illustrates a shape in which the outer diameter of a guide portion is smaller than the tip outer diameter of a rotary cutter and Fig. 46(b) illustrates a shape in which the outer diameter of the guide portion is larger than the tip outer diameter of the rotary cutter.
Fig. 47 is an explanatory diagram illustrating a decorative-material trimming device of the related art.
Fig. 48 is an enlarged view when viewed from XLVIII of Fig. 47.

### DESCRIPTION OF EMBODIMENTS

The particulars shown herein are by way of example and for purposes of illustrative discussion of the embodiments of the present invention only and are presented in the cause of providing what is believed to be the most useful and readily understood description of the principles and conceptual aspects of the present invention. In this regard, no attempt is made to show structural details of the present invention in more detail than is necessary for the fundamental understanding of the present invention, the description is taken with the drawings making apparent to those skilled in the art how the forms of the present invention may be embodied in practice.

### <Decorative-material trimming device>

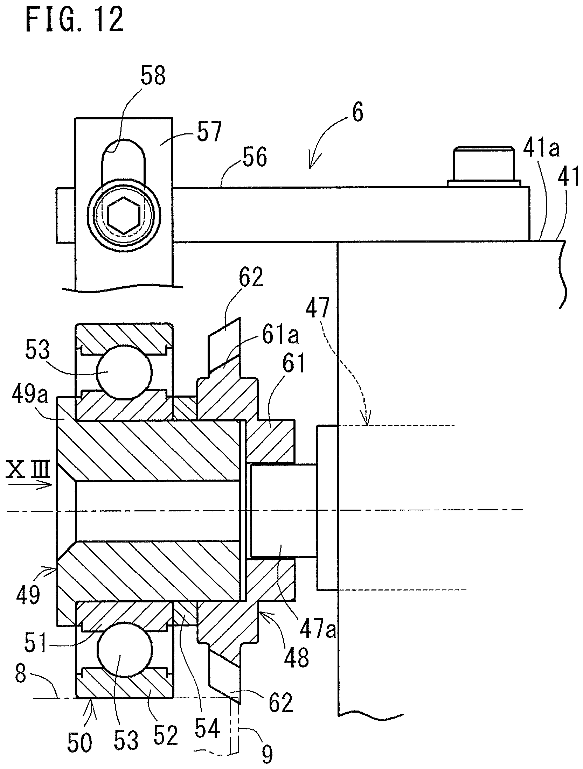

A decorative-material trimming device according to an embodiment is a decorative-material trimming device (6) which performs a chamfering process by removing an extra end (S) of a decorative material (9) bonded to an end surface (8a) of a base material (8), the decorative-material trimming device includes a trimming head (41) which moves along the extra end of the decorative material. Here, the trimming head includes a drive motor (47), a rotary cutter (48) which is connected to a drive shaft (47a) of the drive motor and removes the extra end of the decorative material, an attachment member (49) that is attached to the axis of the rotary cutter, and a guide portion (52) which rolls on the base material while being supported by the attachment member so as to be rotatable about the axis of the rotary cutter (for example, see Fig. 12 and the like). Furthermore, the trimming head (41) is movable in, for example, at least the horizontal direction and the vertical direction.

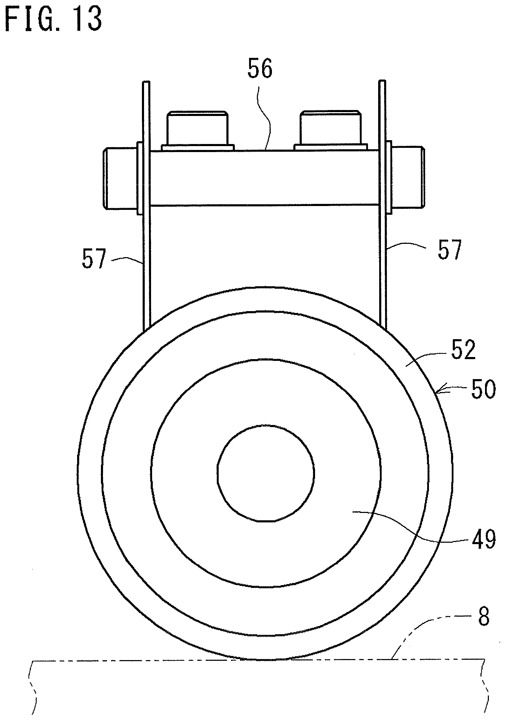

The decorative-material trimming device according to the embodiment can have, for example, a configuration in which the trimming head (41) includes a press-contact piece (57) coming into press-contact with the outer peripheral surface of the guide portion (52) (for example, see Fig. 13 and the like).

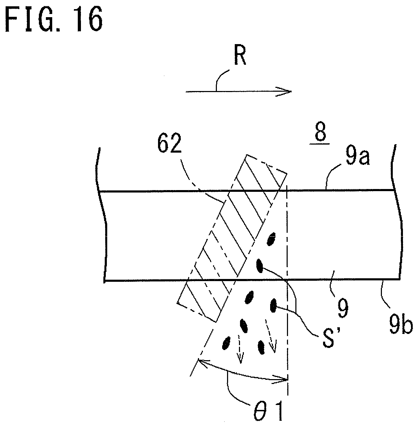

The decorative-material trimming device according to the embodiment can have, for example, a configuration in which the rotary cutter (48) includes a reverse lead blade tip (62) which feeds cut chips toward the outside of a decorative surface (9b) of the decorative material (9) (for example, see Fig. 16 and the like).

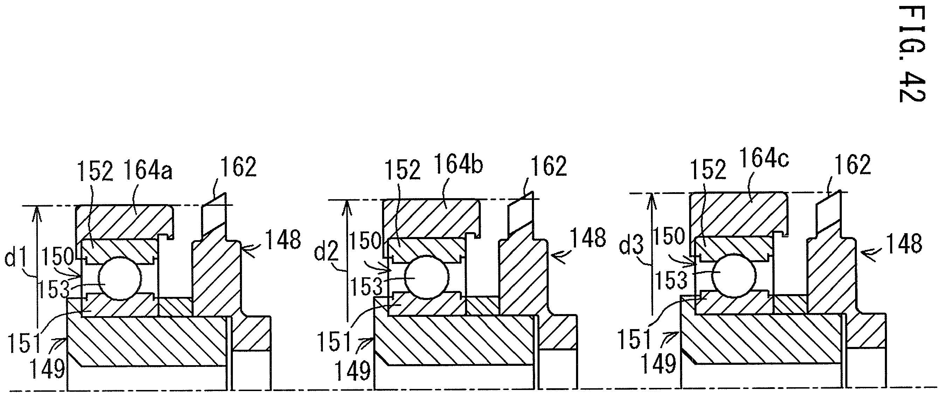

As a reference example, for example, a coated-article production device that produces a coated article by bonding a decorative material to an end surface of a base material can be exemplified. The coated-article production device includes a trimming device with a rotary cutter (29, 48, 129, 148) removing the extra end of the decorative material, and the rotary cutter includes a reverse lead blade tip (62, 162) which feeds cut chips toward the outside of the decorative surface of the decorative material (for example, see Figs. 16 and 42 and the like). Accordingly, it is possible to easily remove the adhesive protruding toward the rear surface of the decorative material and to suppress the generation of burr when the rotary cutter removes the extra end of the decorative material.

### <Coated-article production device>

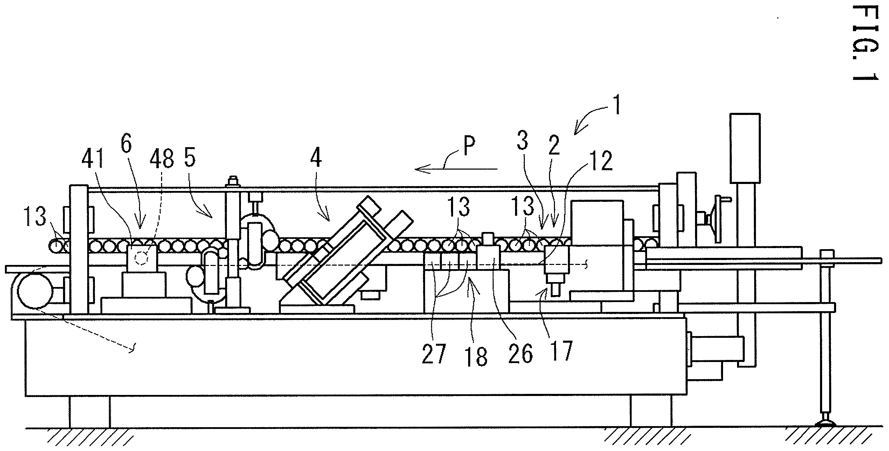

A coated-article production device according to the embodiment is a coated-article production device that produces a coated article by bonding the decorative material (9) to the end surface (8a) of the base material (8), including a decorative material bonding device (3, 3') bonding a decorative material to the end surface of the base material and the decorative-material trimming device (6) (for example, see Figs. 1 and 12 and the like).

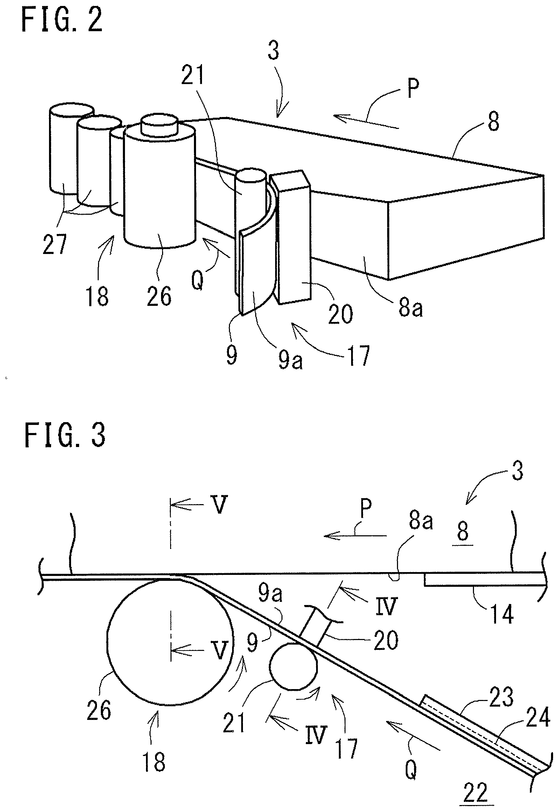

The coated-article production device according to the embodiment can have, for example, a configuration in which the decorative material bonding device (3, 3') includes a coating unit (17) which coats an adhesive (10) onto a rear surface (9a) of a decorative material sent toward the end surface of the base material conveyed in a predetermined conveying direction (P) and a pressing unit (18) which presses the rear surface of the decorative material coated by the adhesive using the coating unit against the end surface of the base material (for example, see Fig. 2 and the like). Accordingly, the gap between the coating unit and the pressing unit is comparatively small, and hence the time from the coating of the adhesive to the bonding of the base material and the decorative material is shortened. As a result, it is possible to bond the base material and the decorative material while suppressing an increase in processing cost without any precise temperature management for the base material. Further, it is possible to easily remove the adhesive protruding toward the rear surface of the decorative material when the rotary cutter of the decorative-material trimming device removes the extra end of the decorative material. Furthermore, the "rear surface of the decorative material" indicates the bonding surface opposite to the decorative surface of the decorative material.

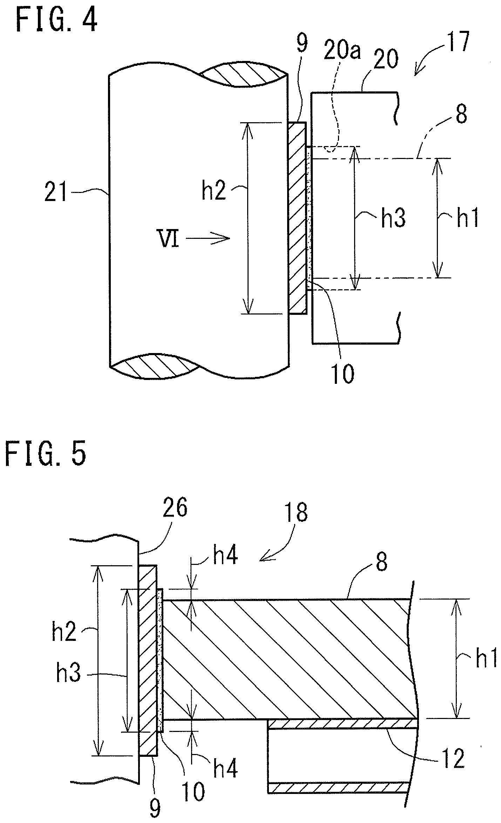

In the case of the above-described embodiment, for example, the coating unit (17) can coat the adhesive (10) onto the rear surface (9a) of the decorative material (9) at a coating width (h3) larger than the height (h1) of the end surface (8a) of the base material (8) (for example, see Fig. 4 and the like). Accordingly, it is possible to reliably bond the base material and the decorative material even when a comparatively thin decorative material is employed. Further, since it is possible to suppress the adhesive from being transferred to the front surface of the base material, it is possible to easily remove the extra end of the adhesive in the subsequent step.

In the case of the above-described embodiment, for example, the pressing unit (18) can press the rear surface (9a) of the decorative material (9) against the end surface of the base material so that the adhesive (10) protrudes toward the upper and lower portions of the upper and lower edges of the end surface (8a) of the base material (8) (for example, see Fig. 5 and the like). Accordingly, it is possible to further improve the adhesiveness between the base material and the decorative material and to easily remove the extra portion of the adhesive. Furthermore, the adhesive protruding amount (h4) can be set, for example, 0.1 to 0.5 mm (desirably, 0.1 to 0.3 mm).

In the case of the above-described embodiment, for example, the coating unit (17) can include a coating nozzle (20) with a slit-shaped coating port (20a) coating the adhesive (10) and a rotatable pressing roller (21) facing the coating nozzle with the decorative material (9) interposed therebetween and pressing the decorative material (9) toward the coating nozzle (for example, see Figs. 3 and 4 and the like). Accordingly, the coating unit can be decreased in size. Thus, the gap between the coating unit and the pressing unit is further shortened, and hence the adhesiveness between the base material and the decorative material can be further improved.

### <Coated-article production method>

A coated-article production method according to the embodiment is a coated-article production method of producing a coated article by bonding the decorative material (9) to the end surface (8a) of the base material (8), including a decorative material bonding step of bonding the decorative material to the end surface of the base material and a decorative material trimming step of performing a chamfering process by removing the extra end (S) of the decorative material bonded to the end surface of the base material using the decorative-material trimming device (6) (for example, see Figs. 1 and 12 and the like).

The coated-article production method according to the embodiment can have, for example, a configuration in which the decorative material bonding step is performed so that the adhesive is coated onto the rear surface of the decorative material fed toward the end surface of the base material conveyed in a predetermined conveying direction by using the decorative material bonding device (3, 3') and the rear surface of the decorative material having the adhesive coated thereon is pressed against the end surface of the base material (for example, see Fig. 2 and the like). Accordingly, the adhesive is coated onto the rear surface of the decorative material, and the base material and the decorative material are bonded to each other. As a result, it is possible to suppress an increase in processing cost without any precise temperature management for the base material. Further, the gap between the coating unit and the pressing unit is comparatively shortened, and hence the time from the coating of the adhesive to the bonding of the base material and the decorative material is shortened. As a result, the base material and the decorative material can be reliably bonded to each other.

In the case of the above-described embodiment, for example, the coating step can be performed so that the adhesive (10) is coated onto the rear surface of the decorative material (9) at a coating width (h3) larger than the height (h1) of the end surface (8a) of the base material (8) (for example, see Fig. 4 and the like). Accordingly, it is possible to reliably bond the base material and the decorative material even when a comparatively thin decorative material is employed. Further, since it is possible to suppress the adhesive from being transferred to the front surface of the base material, it is possible to easily remove the extra end of the adhesive in the subsequent step.

In the case of the above-described embodiment, for example, the pressing step can be performed so that the rear surface (9a) of the decorative material (9) is pressed against the end surface of the base material so that the adhesive (10) protrudes toward the upper and lower portions of the upper and lower edges of the end surface (8a) of the base material (8) (for example, see Fig. 5 and the like). Accordingly, it is possible to further improve the adhesiveness between the base material and the decorative material and to easily remove the extra portion of the adhesive. Furthermore, the adhesive protruding amount (h4) can be set, for example, 0.1 to 0.5 mm (desirably, 0.1 to 0.3 mm).

In the case of the above-described embodiment, for example, the coating step can be performed by the coating unit (17) including the coating nozzle (20) with the slit-shaped coating port (20a) coating the adhesive (10) and the rotatable pressing roller (21) facing the coating nozzle with the decorative material (9) interposed therebetween and pressing the decorative material (9) toward the coating nozzle (for example, see Figs. 3 and 4 and the like). Accordingly, the coating unit can be decreased in size. Thus, the gap between the coating unit and the pressing unit is further shortened, and hence the adhesiveness between the base material and the decorative material can be further improved.

Furthermore, the base material can be, for example, a wood base material such as a particle board, a medium density fiberboard (MDF), a wood veneer, and a woody plywood. Further, a resinous or metallic base material can be also used. Further, the decorative material can be, for example, thermosetting resin such as melamine resin, diallyl phthalate resin, and polyester resin. Further, a flexible material can be also used. Further, the decorative material can have, for example, a single layer structure or a multi-layer structure. Further, the thickness of the decorative material can be set to, for example, 0.3 to 2.0 mm (desirably, 0.3 to 1.2 mm and particularly 0.3 to 0.5 mm). Further, the adhesive can be, for example, a hot-melt adhesive.

### <First Decorative-material trimming device>

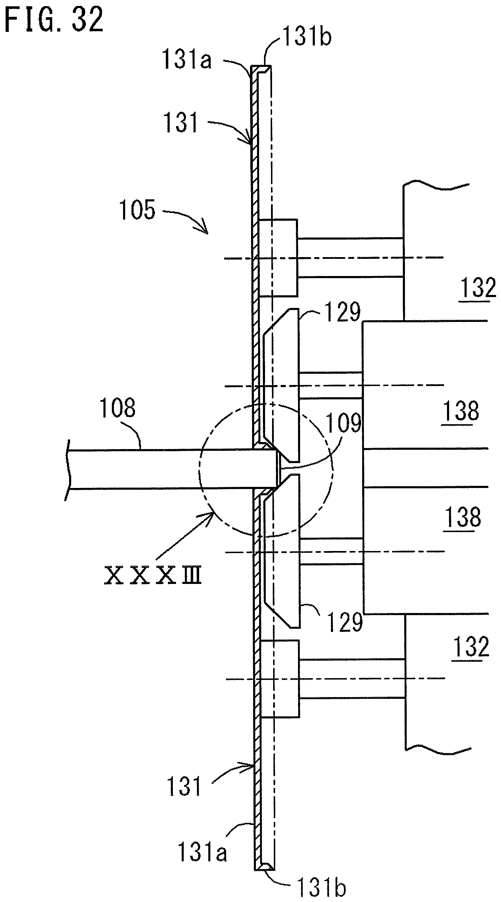

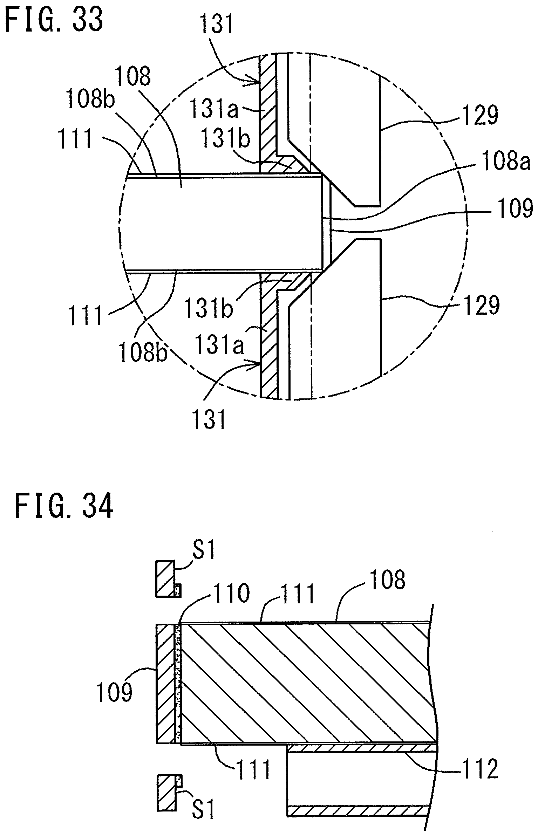

A first decorative-material trimming device according to the embodiment is a first decorative-material trimming device (105) which removes a longitudinal extra end (S1) of a decorative material (109) bonded to an end surface (108a) of a base material (108), including a guide roller (131) which guides the front surface edge of the base material conveyed in a predetermined conveying direction (P) and a rotatable trimming cutter (129) which removes the longitudinal extra end of the decorative material bonded to the end surface of the base material while the front surface edge of the base material is guided by the guide roller (for example, see Figs. 32 and 33 and the like). Then, the guide roller (131) includes a disk portion (131a) and a flange portion (131b) which extends in a cylindrical shape from the outer periphery of the disk portion so as to guide the front surface edge of the base material, and the trimming cutter (129) is disposed so as to remove the longitudinal extra end of the decorative material while a part thereof is located inside the flange portion.

The first decorative-material trimming device according to the embodiment can have, for example, a configuration in which a protection film (111) is stuck to a front surface (108b) of the base material (108) (for example, see Fig. 33 and the like).

### <Coated-article production device>

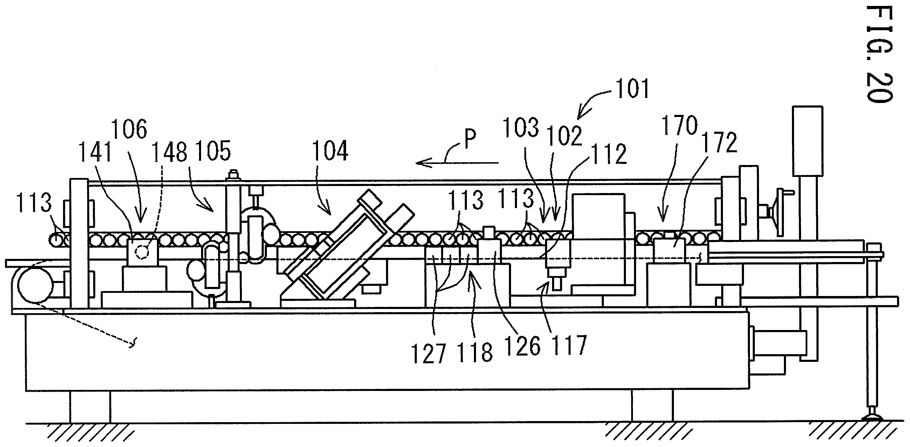

A coated-article production device according to the embodiment is a coated-article production device that produces a coated article by bonding the decorative material (109) to the end surface (108a) of the base material (108), including a decorative material bonding device (103, 103') bonding the decorative material to the end surface of the base material and the first decorative-material trimming device (105) (for example, see Figs. 20, 25, and 31 and the like).

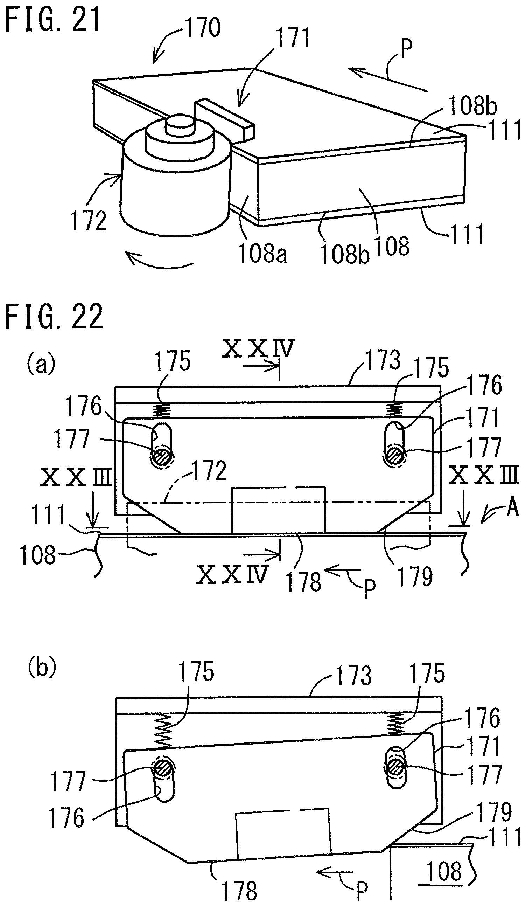

The coated-article production device according to the embodiment can include, for example, a base material milling device (170) which cuts the end surface (108a) of the base material (108) to which the decorative material (109) is bonded (for example, see Fig. 21 and the like). The base material milling device (170) includes a pressing member (171) which presses the front surface edge of the protection film (111) stuck to the front surface of the base material conveyed in a predetermined conveying direction (P) and a rotatable milling cutter (172) which cuts the end surface of the base material while the front surface edge of the protection film is pressed by the pressing member. Accordingly, the end surface of the base material is cut by the milling cutter while the front surface edge of the protection film is pressed by the pressing member. For that reason, the end surface of the base material can be cut while the floating of the protection film is suppressed. As a result, it is possible to suppress foreign materials such as cut chips from intruding into a gap between the protection film and the front surface of the base material and to suppress the adhesive from being transferred to the front surface of the base material in the subsequent step of bonding the base material and the decorative material. Thus, it is possible to suppress degradation in appearance of the coated article.

In the case of the above-described embodiment, for example, the pressing member (171) can be supported by a support body (173) so as to be movable in the up and down direction and be urged in a direction of pressing the front surface edge of the protection film by an urging member (175) provided in the support body (for example, see Fig. 22 and the like). Accordingly, the front surface edge of the protection film can be more reliably pressed by the pressing member with a simple structure.

In the case of the above-described embodiment, for example, the pressing member (171) can include a pressing surface (178) which presses the front surface edge of the protection film (111) and an inclined surface (179) which is obliquely inclined upward from the pressing surface toward the upstream side of the base material in a predetermined conveying direction (P) (for example, see Fig. 22 and the like). Accordingly, since the base material conveyed in a predetermined conveying direction contacts the inclined surface, the pressing member is displaced against the urging force of the urging member so that the pressing surface is guided to the front surface edge of the protection film.

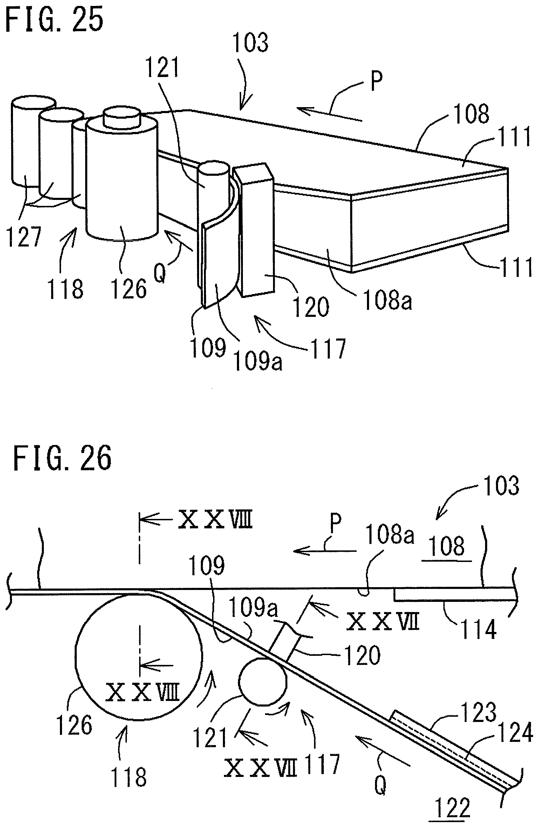

The coated-article production device according to the embodiment can have, for example, a configuration in which the decorative material bonding device (103, 103') includes a coating unit (117) which coats an adhesive (110) onto the rear surface (109a) of the decorative material (109) fed toward the end surface (108a) of the base material (108) conveyed in a predetermined conveying direction (P) and a pressing unit (118) which presses the rear surface of the decorative material having the adhesive coated thereon by the coating unit against the end surface of the base material (for example, see Fig. 25 and the like). Accordingly, the gap between the coating unit and the pressing unit is comparatively shortened, and hence the time from the coating of the adhesive to the bonding of the base material and the decorative material is shortened. As a result, it is possible to bond the base material and the decorative material while suppressing an increase in processing cost without any precise temperature management for the base material.

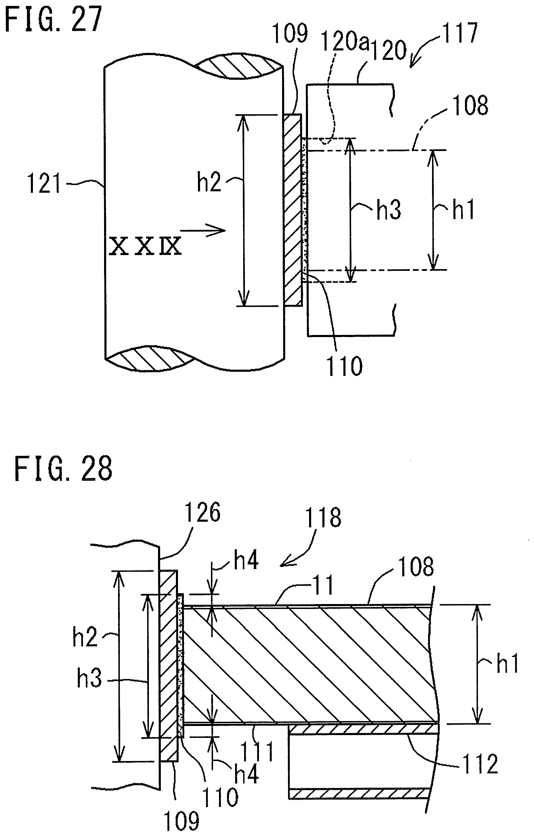

In the case of the above-described embodiment, for example, the coating unit (117) can coat the adhesive (110) onto the rear surface (109a) of the decorative material (109) at a coating width (h3) larger than the height (h1) of the end surface (108a) of the base material (108) (for example, see Fig. 27 and the like). Accordingly, it is possible to reliably bond the base material and the decorative material even when a comparatively thin decorative material is employed. Further, since it is possible to suppress the adhesive from being transferred to the front surface of the base material, it is possible to easily remove the extra end of the adhesive in the subsequent step.

In the case of the above-described embodiment, for example, the coating unit (117) can include a coating nozzle (120) with a slit-shaped coating port (120a) coating the adhesive (110) and a rotatable pressing roller (121) facing the coating nozzle with the decorative material (109) interposed therebetween and pressing the decorative material (109) toward the coating nozzle (for example, see Fig. 27 and the like). Accordingly, the coating unit can be decreased in size. Thus, the gap between the coating unit and the pressing unit is further shortened, and hence the adhesiveness between the base material and the decorative material can be further improved.

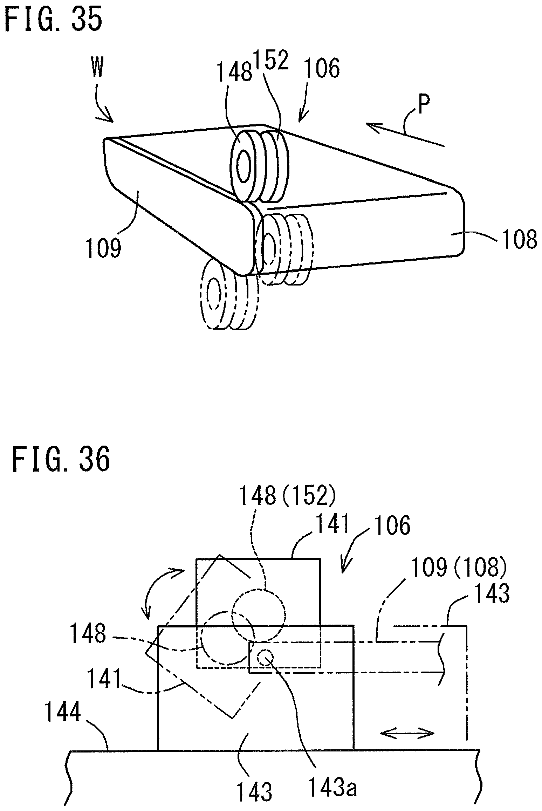

The coated-article production device according to the embodiment may include, for example, a second decorative-material trimming device (106) which performs a chamfering process by removing an extra end (S2) of the decorative material (109) bonded to the end surface (108a) of the base material (108) (for example, see Figs. 35 to 38 and the like). Then, the second decorative-material trimming device (106) includes a trimming head (141) which moves along the extra end (S2) of the decorative material, and the trimming head includes a drive motor (147), a rotary cutter (148) which is connected to a drive shaft (147a) of the drive motor and removes the extra end of the decorative material, an attachment member (149) attached to the axis of the rotary cutter, and a guide portion (152) which rolls on the base material while being supported by the attachment member so as to be rotatable about the axis of the rotary cutter. Accordingly, the decorative material is chamfered in such a manner that the rotary cutter removes the extra end of the decorative material while the guide portion rolls on the base material when the trimming head moves along the extra end of the decorative material. Then, since the guide portion is supported by the attachment member attached to the rotary cutter so as to be rotatable about the axis of the rotary cutter, the axis of the guide portion is precisely positioned to the axis of the rotary cutter. As a result, the extra end of the decorative material can be precisely removed to be chamfered while the tracing deviation of the guide portion with respect to the base material is suppressed.

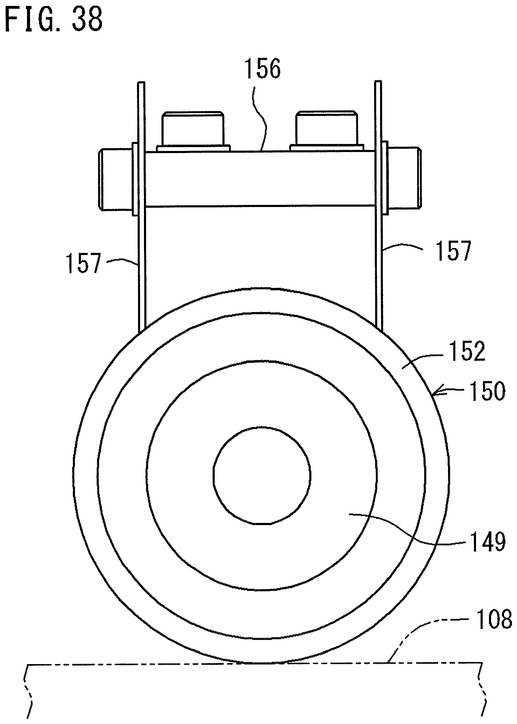

In the case of the above-described embodiment, for example, the trimming head (141) can include a press-contact piece (157) which comes into press-contact with the outer peripheral surface of the guide portion (152) (for example, see Fig. 38 and the like). Accordingly, since the press-contact piece comes into press-contact with the outer peripheral surface of the guide portion, it is possible to prevent the co-rotation of the guide portion with the rotary cutter and to prevent foreign materials such as cut chips from adhering to the outer peripheral surface of the guide portion.

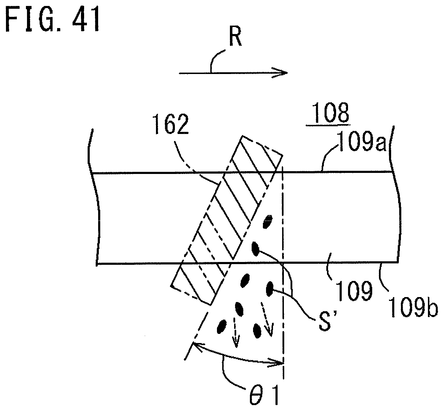

In the case of the above-described embodiment, for example, the rotary cutter (148) can include a reverse lead blade tip (162) which feeds the cut chips toward the outside of a decorative surface (109b) of the decorative material (109) (for example, see Fig. 41 and the like). Accordingly, it is possible to easily remove the adhesive protruding toward the rear surface of the decorative material and to suppress the generation of burr when the rotary cutter removes the extra end of the decorative material.

### <Coated-article production method>

A coated-article production method according to the embodiment is a coated-article production method of producing a coated article by bonding the decorative material (109) to the end surface (108a) of the base material (108), including a decorative material bonding step of bonding the decorative material to the end surface of the base material and a decorative material trimming step of removing the longitudinal extra end (S1) of the decorative material bonded to the end surface of the base material by using the first decorative-material trimming device (105) (for example, see Figs. 20, 25, and 31 and the like).

The coated-article production method according to the embodiment may have, for example, a base material milling step of cutting the end surface of the base material by using the base material milling device (170), and in the decorative material bonding step, the decorative material is bonded to the cut end surface of the base material (for example, see Fig. 21 and the like). Accordingly, the end surface of the base material is cut by the milling cutter while the front surface edge of the protection film is pressed by the pressing member. For that reason, the end surface of the base material can be cut while the floating of the protection film is suppressed. As a result, it is possible to suppress foreign materials such as cut chips from intruding into a gap between the protection film and the front surface of the base material and to suppress the adhesive from being transferred to the front surface of the base material in the subsequent step of bonding the base material and the decorative material. Thus, it is possible to suppress degradation in appearance of the coated article.

The coated-article production method according to the embodiment may have, for example, a configuration in which the decorative material bonding step is performed so that the adhesive (110) is coated onto the rear surface (109a) of the decorative material (109) fed toward the end surface (108a) of the base material (108) conveyed in a predetermined conveying direction (P) by using the decorative material bonding device (103, 103') and the rear surface of the decorative material having the adhesive coated thereon is pressed against the end surface of the base material (for example, see Fig. 25 and the like). Accordingly, the gap between the coating unit and the pressing unit is comparatively shortened, and hence the time from the coating of the adhesive to the bonding of the base material and the decorative material is shortened. As a result, it is possible to bond the base material and the decorative material while suppressing an increase in processing cost without any precise temperature management for the base material.

The coated-article production method according to the embodiment may include, for example, a decorative material trimming step of performing a chamfering process by removing the extra end (S2) of the decorative material (109) bonded to the end surface (108a) of the base material (108) by using the second decorative-material trimming device (106) (for example, see Fig. 35 and the like). Accordingly, the decorative material is chamfered in such a manner that the rotary cutter removes the extra end of the decorative material while the guide portion rolls on the base material when the trimming head moves along the extra end of the decorative material. Then, since the guide portion is supported by the attachment member attached to the rotary cutter so as to be rotatable about the axis of the rotary cutter, the axis of the guide portion is precisely positioned to the axis of the rotary cutter. As a result, the extra end of the decorative material can be precisely removed to be chamfered while the tracing deviation of the guide portion with respect to the base material is suppressed.

Furthermore, in the above-described embodiment, the base material (108) is generally provided in a flat plate shape, and includes the end surface (108a) to which the decorative material (109) is bonded and the front and rear surfaces (108b) which extend from the upper and lower edges of the end surface so as to intersect each other (for example, see Fig. 21). Further, the base material can be, for example, a wood base material such as a particle board, a medium density fiberboard (MDF), a wood veneer, and a woody plywood. Further, a resinous or metallic base material can be also used. Further, the decorative material can be, for example, thermosetting resin such as melamine resin, diallyl phthalate resin, and polyester resin. Further, a flexible material can be also used. Further, the decorative material can have, for example, a single layer structure or a multi-layer structure. Further, the thickness of the decorative material can be set to, for example, 0.3 to 2.0 mm (desirably, 0.3 to 1.2 mm and particularly 0.3 to 0.5 mm). Further, the adhesive can be, for example, a hot-melt adhesive.

Furthermore, the reference numerals of the components in parentheses described in the above-described embodiment indicate the corresponding relation with the detailed components of the embodiments below.

### EMBODIMENT

Hereinafter, embodiments of the invention will be described in detail with reference to the drawings.

### <First Embodiment

### (1) Configuration of Coated-article production device

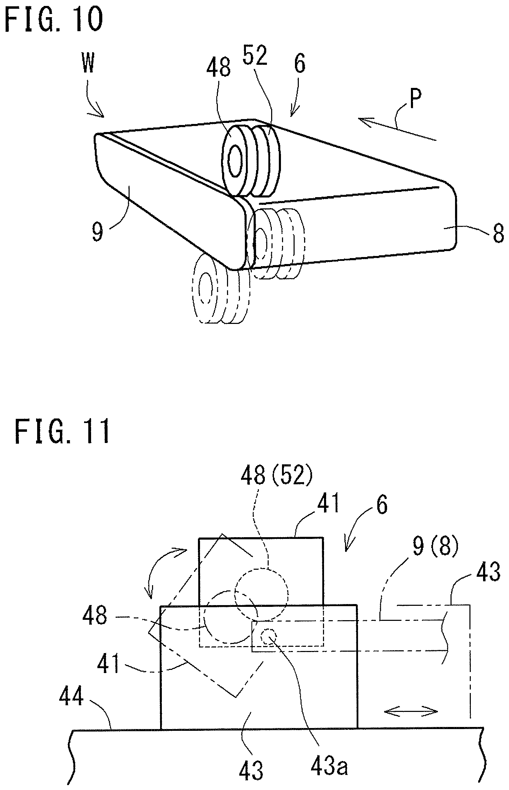

As illustrated in Fig. 1, a coated-article production device 1 according to the embodiment includes a conveying unit 2, a decorative material bonding device 3, an end cut unit 4, a trimming unit 5, and a decorative-material trimming device 6 (also referred to as a "round trimming device") to be described later. Furthermore, in the embodiment, it is assumed that the coated article is a coated article W (see Fig. 10) obtained by bonding a decorative material 9 formed of melamine resin to an end surface 8a of a base material 8 formed by a particle board. Further, the corner portion of the base material 8 is chamfered in a circular-arc shape.

As illustrated in Fig. 1, the conveying unit 2 is used to convey the base material 8 in a predetermined conveying direction P. The conveying unit 2 includes a belt conveyor 12 provided so as to be circulated in the conveying direction P. A plurality of rotatable rolls 13 is disposed in the conveying direction P while being located above the belt conveyor 12. Then, the base material 8 nipped between the belt conveyor 12 and the roll 13 is conveyed in the conveying direction P due to the circulation driving of the belt conveyor 12.

Furthermore, the coated-article production device 1 includes a guide portion 14 (see Fig. 3) which is provided at the input side of the base material 8 so as to position the end surface 8a of the base material 8 in a direction orthogonal to the conveying direction P while contacting the end surface 8a of the base material 8.

As illustrated in Figs. 2 and 3, the decorative material bonding device 3 is used to bond the decorative material 9 to the end surface 8a of the base material 8. The bonding device 3 includes a coating unit 17 which coats a hot-melt adhesive 10 onto a rear surface 9a of the decorative material 9 fed toward the end surface 8a of the base material 8 conveyed in the conveying direction P and a pressing unit 18 which presses the rear surface 9a of the decorative material 9 having the adhesive 10 coated thereon by the coating unit 17 against the end surface 8a of the base material 8.

As illustrated in Fig. 4, the coating unit 17 includes a coating nozzle 20 with a slit-shaped coating port 20a coating the adhesive 10 onto the rear surface 9a of the decorative material 9 at a coating width h3 (for example, about 20.6 mm) larger than the height h1 (for example, about 20 mm) of the end surface 8a of the base material 8. The coating nozzle 20 is connected to a tank (not illustrated) storing the adhesive 10 therein. Further, a rotatable pressing roller 21 pressing the decorative material 9 against the coating nozzle 20 is disposed at a position facing the coating nozzle 20. Due to the rotational driving of the pressing roller 21, the decorative material 9 nipped between the coating nozzle 20 and the pressing roller 21 is fed in a feeding direction Q (see Fig. 3) inclined with respect to the conveying direction P by a predetermined angle.

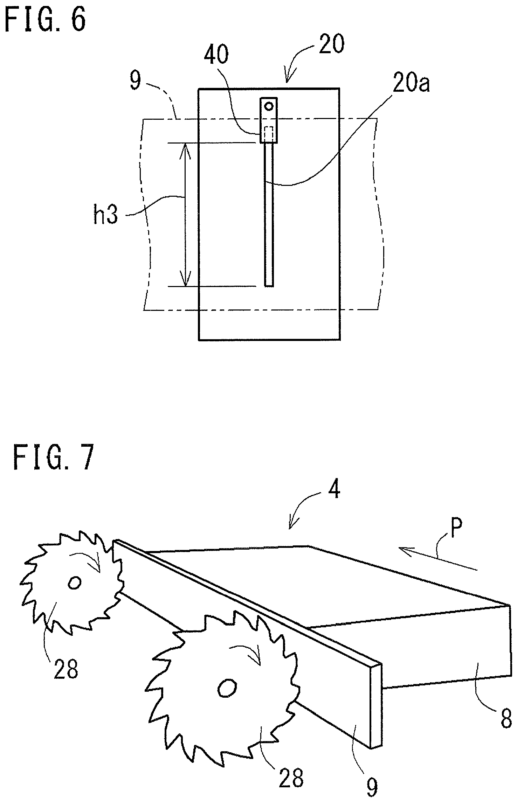

Furthermore, as illustrated in Figs. 4 and 5, the height h2 (for example, about 22 mm) of the decorative material 9 is set to be larger than the height h1 of the base material 8 and the coating width h3 of the adhesive 10 before the trimming process by the trimming unit to be described later. Further, the thickness of the decorative material 9 is set to about 0.3 mm. Further, as illustrated in Fig. 6, an adjustment member 40 that adjusts the slit length of the coating port 20a is attached to the coating nozzle 20 so as to adjust the position of the slit in the longitudinal direction.

Further, as illustrated in Fig. 3, the coating unit 17 includes a table 22 which vertically places the decorative material 9 thereon and a guide portion 23 which contacts the rear surface 9a of the decorative material 9 placed on the table 22 so as to position the rear surface in a direction orthogonal to the feeding direction Q of the decorative material 9. The guide portion 23 is provided with a heating unit 24 such as a flat heater heating the decorative material 9.

As illustrated in Fig. 5, the pressing unit 18 includes a rotatable pressing roller 26 which presses the rear surface 9a of the decorative material 9 having the adhesive 10 coated thereon and fed in the feeding direction Q against the end surface 8a of the base material 8 conveyed in the conveying direction P so as to bond the decorative material to the base material. The pressing roller 26 presses the rear surface 9a of the decorative material 9 against the end surface 8a of the base material 8 so that the adhesive 10 protrudes toward the upper and lower portions of the upper and lower edges of the end surface 8a of the base material 8. Furthermore, the protruding amount h4 of the adhesive 10 is set to about 0.3 mm.

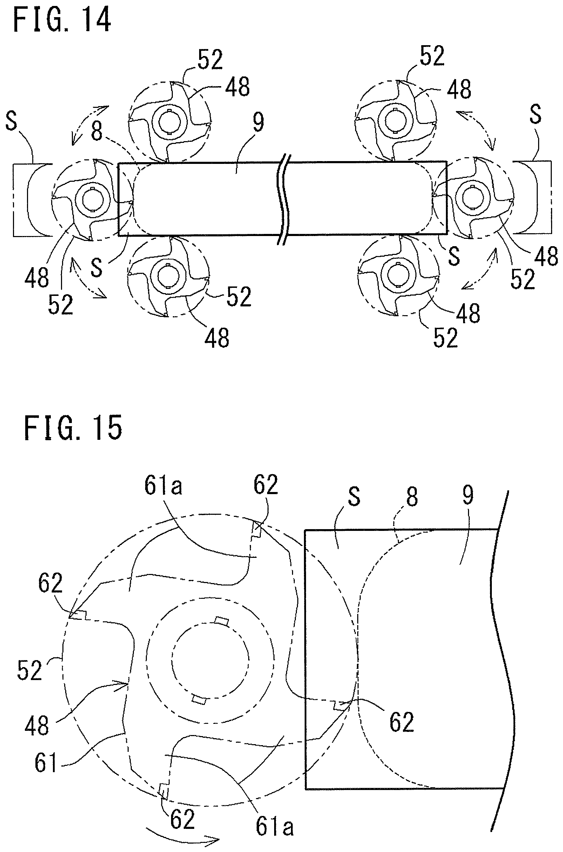

The end cut unit 4 is disposed at the downstream side of the pressing unit 18 in the conveying direction P (see Fig. 1). As illustrated in Fig. 7, the end cut unit 4 includes a rotatable rotary cutter 28 which removes the extra end at the front and rear ends of the decorative material 9 bonded to the base material 8 in the conveying direction P. Furthermore, the extra end of the decorative material 9 is not completely removed in the end cut unit 4, and the extra end S (see Fig. 14) to be removed by the decorative-material trimming device 6 is left.

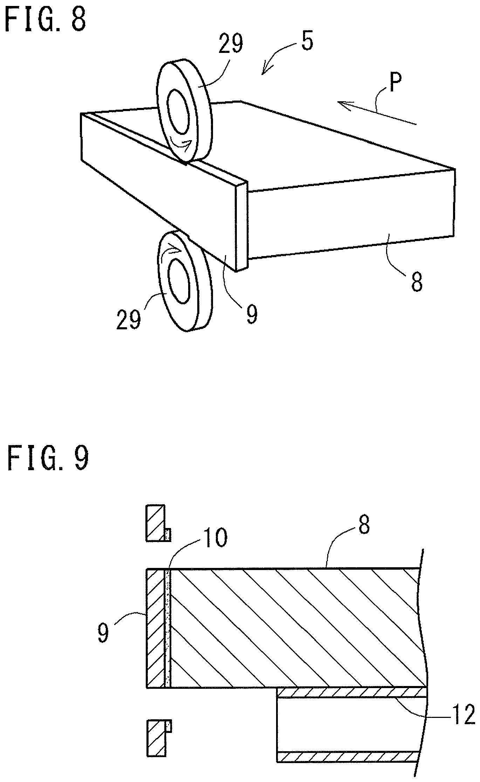

The trimming unit 5 is disposed at the downstream side of the end cut unit 4 in the conveying direction P (see Fig. 1). As illustrated in Fig. 8, the trimming unit 5 includes a rotatable rotary cutter 29 which removes the extra end at the upper and lower edges of the decorative material 9 bonded to the base material 8 in the height direction. The rotary cutter 29 removes the upper and lower portions of the adhesive 10 protruding from the upper and lower edges of the end surface 8a of the base material 8 along with the upper and lower edges of the decorative material 9 (see Fig. 9). Furthermore, as in a rotary cutter 48 to be described later, the blade tip of the rotary cutter 29 is provided in a reverse lead shape which feeds cut chips S' toward the outside of the decorative surface 9b of the decorative material 9 (that is, the opposite side to the base material 8 in the decorative material 9) (see Fig. 16).

The decorative-material trimming device 6 is disposed at the downstream side of the trimming unit 5 in the conveying direction P (see Fig. 1). As illustrated in Fig. 10, the decorative-material trimming device 6 is used to perform a chamfering process by removing the extra end S (see Fig. 14) at the front and rear ends of the decorative material 9 bonded to the end surface 8a of the base material 8 in the conveying direction P.

As illustrated in Fig. 11, the decorative-material trimming device 6 includes a trimming head 41 which moves along the extra end S of the decorative material 9. The trimming head 41 is provided so as to be rotatable about a horizontal shaft 43a of the slider 43. The slider 43 is movable in the horizontal direction with respect to the base 44.

As illustrated in Figs. 12 and 13, the trimming head 41 includes a drive motor 47, a rotary cutter 48, an attachment member 49, and a bearing 50. The drive motor 47 is attached to a body 41a of the trimming head 41. Further, the drive shaft 47a of the drive motor 47 is connected to the center hole of the rotary cutter 48 through a key groove. Then, the rotary cutter 48 removes the extra end S of the decorative material 9 when the trimming head 41 is driven by the drive motor 47 so as to move along the extra end S of the decorative material 9. Further, the outer periphery of one end of the attachment member 49 is inserted into the center hole of the rotary cutter 48, and the other end thereof protrudes in the axis direction of the rotary cutter 48.

The bearing 50 is provided at the outer periphery of one end of the attachment member 49 in the axis direction. The bearing 50 includes an inner race 51, an outer race 52 (exemplified as a "guide portion" according to the invention), and a plurality of balls 53 supported between the inner race 51 and the outer race 52 in a rolling manner. The inner race 51 is nipped between a front end flange 49a of the attachment member 49 and an annular spacer 54 disposed at the tip side of the rotary cutter 48. Further, the outer race 52 is supported by the attachment member 49 so as to be rotatable about the axis of the rotary cutter 48. Then, the outer race 52 rolls on the outer peripheral surface of the base material 8 when the trimming head 41 moves along the extra end S of the decorative material 9. Furthermore, in the embodiment, the ball bearing 50 is exemplified as the bearing, but the invention is not limited thereto. For example, a roller bearing may be employed.

A flat plate-shaped bracket 56 is attached to the body 41a of the trimming head 41. Upper ends of a plurality of (two in the drawing) flat plate-shaped press-contact pieces 57 of which the lower ends come into press-contact with the outer peripheral surface of the outer race 52 of the bearing 50 are attached to both sides of the front end of the bracket 56. Specifically, the press-contact pieces 57 are fixed to the bracket 56 by a bolt through an elongated hole 58. According to the invention, when the bolt fixing position of the press-contact piece 57 is adjusted, the position thereof can be adjusted with respect to the outer peripheral surface of the outer race 52 of the bearing 50.

As illustrated in Fig. 15, the rotary cutter 48 includes a body 61 with a plurality of (four in the drawing) protrusion portions 61a which protrudes radially and a blade tip 62 (also referred to as a "tip") attached to the front end of each protrusion portion 61a. As illustrated in Fig. 16, the blade tip 62 which is formed of super steel or diamond is provided in a revere lead shape which feeds cut chips S' toward the outside of the decorative surface 9b of the decorative material 9 (that is, the opposite side to the base material 8 in the decorative material 9). That is, the blade tip 62 is disposed while being inclined with respect to the thickness direction of the decorative material 9 by an acute angle θ1 so that the decorative surface 9b of the decorative material 9 of the front end surface is inclined in the opposite direction to the cutting direction R.

### (2) Coated-article production method

Next, a method of producing the coated article W using the coated-article production device 1 with the above-described configuration will be described. Furthermore, in the embodiment, the decorative material 9 on the table 22 is heated to a predetermined temperature (for example, 20°C) by the heating unit 24 (see Fig. 3), and the base material 8 is not heated at all before and after the base material is input to the coated-article production device 1. In this state, the heated decorative material 9 is bonded to the non-heated base material 8.

First, the base material 8 is conveyed in the conveying direction P by the circulation driving of the belt conveyor 12, and the decorative material 9 is fed in the feeding direction Q by the rotational driving of the pressing roller 21 (see Fig. 3). Then, the adhesive 10 is coated onto the rear surface 9a of the decorative material 9 by the coating nozzle 20 (see Fig. 4). Next, the rear surface 9a of the decorative material 9 having the adhesive 10 coated thereon is pressed against the end surface 8a of the base material 8 by the pressing roller 26 so that both materials 8 and 9 are bonded to each other (see Fig. 5).

Then, when the base material 8 and the decorative material 9 bonded to each other are conveyed to the end cut unit 4, the extra end at the front and rear ends of the decorative material 9 in the conveying direction P is removed by the rotary cutter 28 (see Fig. 7). Next, when the base material 8 and the decorative material 9 of which the ends are cut are conveyed to the trimming unit 5, the extra end at the upper and lower edges of the decorative material 9 is removed by the rotary cutter 29 (see Fig. 8). At this time, the adhesive protruding toward the rear surface 9a of the decorative material 9 is removed along with the upper and lower edges of the decorative material 9 (see Fig. 9).

Subsequently, the base material 8 and the decorative material 9 trimmed by the trimming unit 5 are conveyed to the trimming device 6. Then, the trimming head 41 moves along the extra end S at the front end of the decorative material 9 in the conveying direction P, and moves along the extra end S at the rear end of the decorative material 9 in the conveying direction P (see Fig. 14). During the movement of the trimming head 41, the rotary cutter 48 removes the extra end S of the decorative material 9 while the outer race 52 of the bearing 50 rolls on the outer peripheral surface of the base material 8. At this time, the adhesive protruding toward the rear surface 9a of the decorative material 9 is removed along with the extra end S of the decorative material 9 (see Fig. 14). As a result, the coated article W (see Fig. 10) can be obtained by chamfering the decorative material 9 in response to the outer diameter shape of the substrate 8.

### (3) Effect of Embodiment

According to the decorative-material trimming device 6 of the embodiment, the decorative-material trimming device includes the trimming head 41 which moves along the extra end S of the decorative material 9, and the trimming head 41 includes the drive motor 47, the rotary cutter 48 which is connected to the drive shaft 47a of the drive motor 47 and removes the extra end S of the decorative material 9, the attachment member 49 which is attached to the axis of the rotary cutter 48, and the outer race 52 of the bearing 50 which rolls on the base material 8 while being supported by the attachment member 49 so as to be rotatable about the axis of the rotary cutter 48. Accordingly, when the trimming head 41 moves along the extra end S of the decorative material 9, the rotary cutter 48 removes the extra end S of the decorative material 9 while the outer race 52 of the bearing 50 rolls on the base material 8 so that the decorative material 9 is chamfered. Then, since the outer race 52 of the bearing 50 is supported by the attachment member 49 attached to the rotary cutter 48 so as to be rotatable about the axis of the rotary cutter 48, the axis of the outer race 52 of the bearing 50 is precisely positioned to the axis of the rotary cutter 48. As a result, the extra end S of the decorative material 9 can be precisely removed to be chamfered while the tracing deviation of the outer race 52 of the bearing 50 with respect to the base material 8 is suppressed. Particularly, according to the embodiment, the extra end S of the decorative material 9 can be precisely removed to be chamfered even when the extra end S of the decorative material 9 is provided in a reverse tapered shape.

Further, in the embodiment, the trimming head 41 includes the press-contact piece 57 which comes into press-contact with the outer peripheral surface of the outer race 52 of the bearing 50. Since the press-contact piece 57 comes into press-contact with the outer peripheral surface of the outer race 52 of the bearing 50, it is possible to prevent the co-rotation of the outer race 52 of the bearing 50 with the rotary cutter 48 and to prevent foreign materials such as cut chips from adhering to the outer peripheral surface of the outer race 52 of the bearing 50.

Further, in the embodiment, the rotary cutter 48 of the decorative-material trimming device 6 includes the reverse lead blade tip 62 which feeds cut chips toward the outside of the decorative surface 9b of the decorative material 9. Accordingly, it is possible to easily remove the adhesive protruding toward the rear surface 9a of the decorative material 9 and to suppress the generation of burr when the rotary cutter 48 removes the extra end S of the decorative material 9. Further, in the embodiment, since the blade tip of the rotary cutter 29 of the trimming unit 5 is also provided in a reverse lead shape, the operation and the effect are substantially similar to those of the rotary cutter 48.

Further, in the embodiment, the decorative material bonding device 3 includes the coating unit 17 which coats the adhesive 10 onto the rear surface 9a of the decorative material 9 fed toward the end surface 8a of the base material 8 conveyed in the predetermined conveying direction P and the pressing unit 18 which presses the rear surface 9a of the decorative material 9 having the adhesive coated thereon by the coating unit 17 against the end surface 8a of the base material 8. Accordingly, the gap between the coating unit 17 and the pressing unit 18 is comparatively shortened, and hence the time from the coating of the adhesive to the bonding of the base material 8 and the decorative material 9 is shortened. As a result, it is possible to bond the base material 8 and the decorative material 9 while suppressing an increase in processing cost without any precise temperature management for the base material 8. Further, it is possible to easily remove the adhesive protruding toward the rear surface 9a of the decorative material 9 when the rotary cutter 48 of the decorative-material trimming device 6 removes the extra end S of the decorative material 9.

Further, in the embodiment, there is no need to heat the base material 8 by the guide portion 14 (see Fig. 3). Thus, a comparatively long guide portion exhibiting an effective guide function can be employed as the guide portion 14. On the contrary, in the configuration of the related art in which the base material is heated by the guide portion, it is difficult to employ a long guide portion which is easily deformed by the heating.

Further, in the embodiment, since the coating unit 17 coats the adhesive 10 onto the rear surface 9a of the decorative material 9 at the coating width h3 larger than the height h1 of the end surface 8a of the base material 8, the base material 8 and the decorative material 9 can be reliably bonded to each other even when the decorative material 9 having a comparatively thin thickness (for example, a thickness of 0.5 mm or less) is employed. Further, since it is possible to suppress the adhesive 10 from being transferred to the front surface of the base material 8, it is possible to easily remove the extra portion of the adhesive 10 in the subsequent step. On the contrary, in the related art in which the adhesive is coated onto the end surface of the base material so as to bond the base material and the decorative material to each other, the adhesive is easily transferred to the front surface of the base material and the extra end of the adhesive is not easily removed in the subsequent step.

Further, in the embodiment, the coating unit 17 includes the coating nozzle 20 with the slit-shaped coating port 20a coating the adhesive 10 and the pressing roller 21 facing the coating nozzle 20 with the decorative material 9 interposed therebetween and pressing the decorative material 9 toward the coating nozzle 20. Accordingly, the coating unit 17 can be decreased in size. Thus, the gap between the coating unit 17 and the pressing unit 18 is further shortened, and hence the adhesiveness of the base material 8 and the decorative material 9 can be further improved.

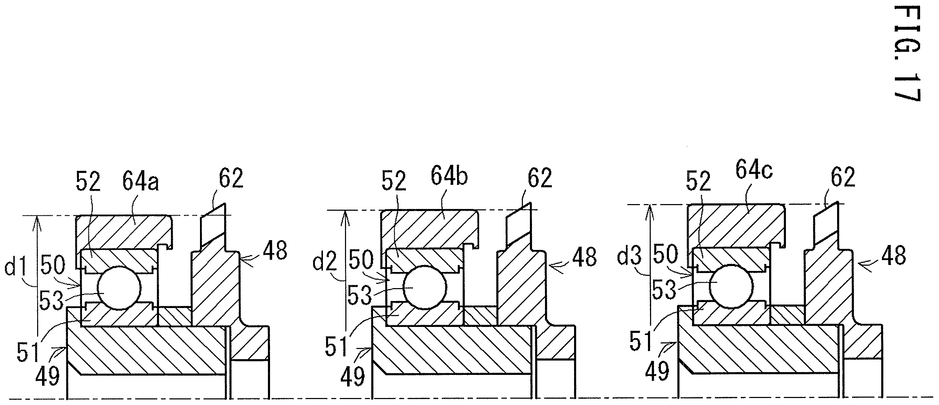

Furthermore, the invention is not limited to the above-described embodiment, and various modifications can be made within the scope of the invention as defined in the appended claims. That is, in the above-described embodiment, the outer race 52 of the bearing 50 is exemplified as the guide portion rolling on the substrate 8, but the invention is not limited thereto. For example, the rotation roller supported by the attachment member 49 so as to be rotatable about the axis of the rotary cutter 48 may be employed as the guide portion. Further, for example, as illustrated in Fig. 17, annular adaptors 64a, 64b, and 64c attached to the outer race 52 of the bearing 50 can be employed as the guide portion. In this case, for example, when the annular adaptors 64a, 64b, and 64c having different outer diameters d1, d2, and d3 are prepared, an appropriate annular adaptor can be selected in response to the degradation state of the blade tip 62 of the rotary cutter 48.

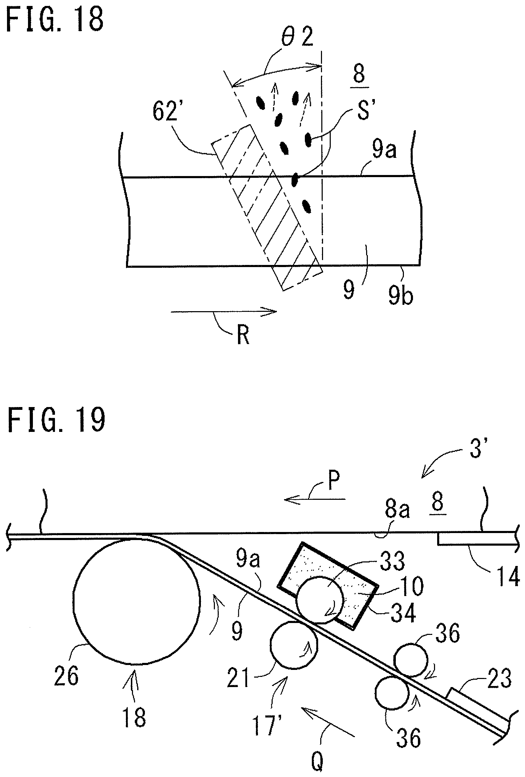

Further, in the above-described embodiment, the rotary cutter 48 with the reverse lead blade tip 62 feeding cut chips toward the outside of the decorative surface 9b of the decorative material 9 is exemplified, but the invention is not limited thereto. For example, as illustrated in Fig. 18, the rotary cutter may include a normal lead blade tip 62' which feeds cut chips S' toward the inside of the decorative surface 9b of the decorative material 9 (that is, toward the base material 8). In this case, the blade tip 62' is generally disposed while being inclined at an acute angle θ2 with respect to the thickness direction of the decorative material 9 so that the rear surface 9a of the decorative material 9 of the front end surface is inclined in the opposite direction to the cutting direction R.

Further, in the above-described embodiment, the coating unit 17 with the coating nozzle 20 coating the adhesive 10 onto the rear surface 9a of the decorative material 9 is exemplified, but the invention is not limited thereto. For example, as illustrated in Fig. 19, a coating unit 17' with a coating roller 33 coating the adhesive 10 onto the rear surface 9a of the decorative material 9 can be employed. In this case, the coating roller 33 is generally disposed inside the storage chamber 34 storing the adhesive 10.

Further, in the above-described embodiment, the pressing unit 18 with the rotatable pressing roller 26 pressing the decorative material 9 against the end surface 8a of the base material 8 is exemplified, but the invention is not limited thereto. For example, a pressing unit with a fixed guide pressing the decorative material 9 against the end surface 8a of the base material 8 may be employed instead of or in addition to the pressing roller 26.

Further, in the above-described embodiment, the conveying unit 2 with the belt conveyor 12 conveying the base material 8 in the conveying direction P is exemplified, but the invention is not limited thereto. For example, a conveying unit with another conveyor such as a roller conveyor and a chain conveyor or a conveying unit with a robot hand conveying the base material in the conveying direction may be employed.

Further, in the above-described embodiment, the feeding unit feeding the decorative material 9 in the feeding direction Q by the coating nozzle 20 (or the coating roller 33) and the pressing roller 21 is provided, but the invention is not limited thereto. For example, as illustrated in Fig. 19, a feeding unit with a rotatable supply roller 36 nipping and feeding the decorative material 9 in the feeding direction Q may be provided separately from the coating unit 17.

Further, in the above-described embodiment, the adhesive 10 is coated onto the rear surface 9a of the decorative material 9 at the coating width h3 (the coating height h3) larger than the height h1 of the end surface 8a of the base material 8, but the invention is not limited thereto. For example, the adhesive 10 may be coated onto the rear surface 9a of the decorative material 9 at a coating width smaller than the height h1 of the end surface 8a of the base material 8.

Further, in the above-described embodiment, the adhesive 10 is coated onto the rear surface 9a of the heated decorative material 9, but the invention is not limited thereto. For example, when the non-heated decorative material 9 has a comparatively high temperature (for example, about 20°C) in summer or the like, the adhesive 10 may be coated onto the rear surface 9a of the decorative material 9 without forcedly heating the decorative material 9. Further, in the above-described embodiment, the decorative material 9 is bonded to the end surface 8a of the non-heated base material 8, but the invention is not limited thereto. For example, the decorative material 9 may be bonded to the end surface 8a of the heated base material 8.

Further, in the above-described embodiment, the decorative material 9 is conveyed to the end cut unit 4 so as to cut the end thereof and is conveyed to the trimming unit 5 so as to trim the decorative material, but the invention is not limited thereto. For example, the decorative material 9 may be conveyed to the end cut unit 4 so as to cut the end thereof after the decorative material 9 is trimmed by the trimming unit 5.

### <Second Embodiment

### (1) Configuration of Coated-article production device

As illustrated in Fig. 20, a coated-article production device 101 according to the embodiment includes the conveying unit 2, a base material milling device 170, a decorative material bonding device 103, a decorative material end cut device 104, a first decorative-material trimming device 105, and a second decorative-material trimming device 106 (also referred to as a "round trimming device") to be described later.

Furthermore, in the embodiment, it is assumed that the coated article is a coated article W (see Fig. 35) obtained by bonding a decorative material 109 formed of melamine resin to an end surface 108a of a base material 108 formed by a particle board. Further, it is assumed that a protection film 111 formed of transparent resin is stuck to front and rear surfaces 108b of the base material 108 (see Fig. 21).

As illustrated in Fig. 20, the conveying unit 102 is used to convey the base material 108 in the predetermined conveying direction P. The conveying unit 102 includes a belt conveyor 112 provided so as to be circulated in the conveying direction P. A plurality of rotatable rolls 113 is disposed in the conveying direction P while being located above the belt conveyor 112. Then, the base material 108 nipped between the belt conveyor 112 and the roll 113 is conveyed in the predetermined conveying direction P due to the circulation driving of the belt conveyor 112.

Furthermore, a guide portion 114 is provided at the input side of the base material 108 in the coated-article production device 101 so as to position the end surface 108a of the base material 108 in a direction orthogonal to the conveying direction P while contacting the end surface (see Fig. 26).

As illustrated in Fig. 21, the base material milling device 170 is used to cut the end surface 108a of the base material 108 before the decorative material 109 is bonded thereto. The base material milling device 170 includes a pressing member 171 that presses the front surface edge of the protection film 111 of the base material 108 conveyed in the predetermined conveying direction P and a milling cutter 172 which cuts the end surface 108a of the base material 108 while the front surface edge of the protection film 111 is pressed by the pressing member 171. The milling cutter 172 is rotatable about a vertical axis by a drive motor (not illustrated).

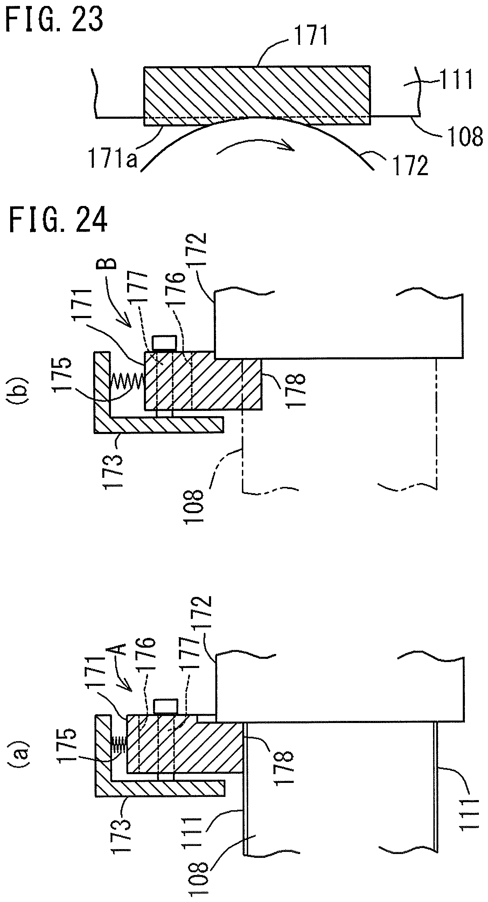

As illustrated in Figs. 22 to 24, the pressing member 171 is supported by an L-shaped support body 173 provided at the base side (not illustrated) of the device 170 so as to be movable in the up and down direction. Specifically, the pressing member 171 is supported so as to be movable in the up and down direction in a manner such that a support pin 177 provided in the support body 173 so as to extend in the horizontal direction is inserted through with an allowance an elongated hole 176 provided in the pressing member 171 so as to extend in the up and down direction. Further, the pressing member 171 is urged in a direction of pressing the front surface edge of the protection film 111 by an urging member 135 as a spring provided between the support body 173 and the pressing member 171. Then, the pressing member 171 is located at an upward movement position A (see Fig. 24(a)) when the front surface edge of the protection film 111 of the base material 108 is pressed and is located at the downward movement position B (see Fig. 24(b)) when the front surface edge of the protection film 111 of the base material 108 is not pressed.

The pressing member 171 presses the front surface edge of the protection film 111 while an end 171a protrudes outward from the front surface edge of the base material 108 (see Fig. 23). Further, the pressing member 171 includes a pressing surface 178 which presses the front surface edge of the protection film 111 and an inclined surface 179 which is obliquely inclined upward in a direction from the pressing surface 178 toward the upstream side of the base material 108 in the predetermined conveying direction P (see Fig. 22). Then, when the base material 108 conveyed in the predetermined conveying direction P contacts the inclined surface 179, the pressing member 171 is displaced against the urging force of an urging member 175, and hence the pressing surface 178 is guided to the front surface edge of the protection film 111.

Furthermore, in the embodiment, the pressing member 171 formed of a material such as resin cuttable by the milling cutter 172 is employed. Accordingly, even when the relative position between the milling cutter 172 and the pressing member 171 is changed, this change can be handled by cutting the pressing member 171 using the milling cutter 172.

The decorative material bonding device 103 is disposed at the downstream side of the base material milling device 170 in the conveying direction P (see Fig. 20). As illustrated in Figs. 25 and 26, the decorative material bonding device 103 is used to bond the decorative material 109 to the end surface 108a of the base material 108. The bonding device 103 includes a coating unit 117 which coats a hot-melt adhesive 110 onto the rear surface 109a of the decorative material 109 fed toward the end surface 108a of the base material 108 conveyed in the conveying direction P and a pressing unit 118 which presses the rear surface 109a of the decorative material 109 having the adhesive 110 coated thereon by the coating unit 117 against the end surface 108a of the base material 108.

As illustrated in Fig. 27, the coating unit 117 includes a coating nozzle 120 with a slit-shaped coating port 120a coating the adhesive 110 onto the rear surface 109a of the decorative material 109 at the coating width h3 (for example, about 20.6 mm) larger than the height h1 (for example, about 20 mm) of the end surface 108a of the base material 108. The coating nozzle 120 is connected to a tank (not illustrated) storing the adhesive 110. Further, a rotatable pressing roller 121 pressing the decorative material 109 toward the coating nozzle 120 is disposed at a position facing the coating nozzle 120. Due to the rotational driving of the pressing roller 121, the decorative material 109 nipped between the coating nozzle 120 and the pressing roller 121 is fed in the feeding direction Q (see Fig. 26) inclined by a predetermined angle with respect to the conveying direction P.

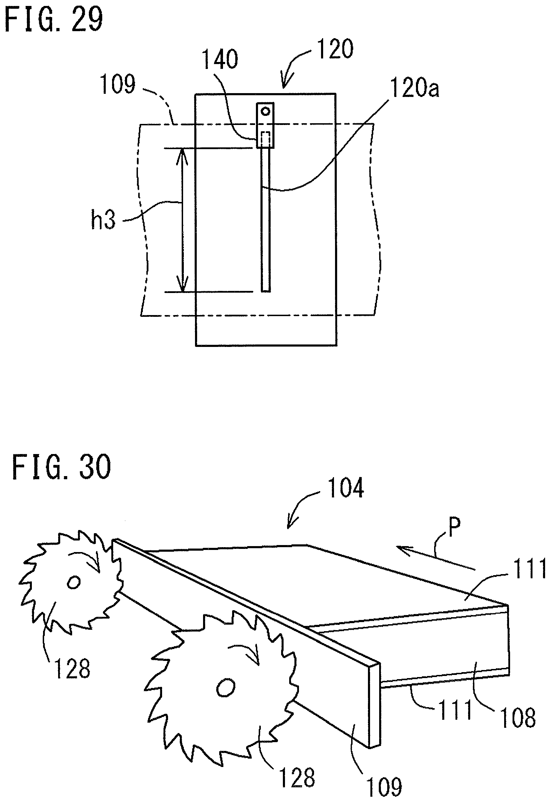

Furthermore, as illustrated in Figs. 27 and 28, the height h2 (for example, about 22 mm) of the decorative material 109 is set to be larger than the height h1 of the base material 108 and the coating width h3 of the adhesive 110 before the trimming process using the first decorative-material trimming device. Further, the thickness of the decorative material 109 is set to about 0.3 mm. Further, as illustrated in Fig. 29, an adjustment member 140 that adjusts the slit length of the coating port 120a is attached to the coating nozzle 120 so as to adjust the position of the slit in the longitudinal direction.

Further, as illustrated in Fig. 26, the coating unit 117 includes a table 122 which vertically places the decorative material 109 thereon and a guide portion 123 which contacts the rear surface 109a of the decorative material 109 placed on the table 122 so as to position the rear surface in a direction orthogonal to the feeding direction Q of the decorative material 109. The guide portion 123 is provided with a heating unit 124 such as a flat heater heating the decorative material 109.

As illustrated in Fig. 28, the pressing unit 118 includes a rotatable pressing roller 126 which presses the rear surface 109a of the decorative material 109 having the adhesive 110 coated thereon and fed in the feeding direction Q against the end surface 108a of the base material 108 conveyed in the conveying direction P. The pressing roller 126 presses the rear surface 109a of the decorative material 109 against the end surface 8a of the base material 8 so that the adhesive 110 protrudes toward the upper and lower portions of the upper and lower edges of the end surface 108a of the base material 108. Furthermore, the protruding amount h4 of the adhesive 110 is set to about 0.3 mm.

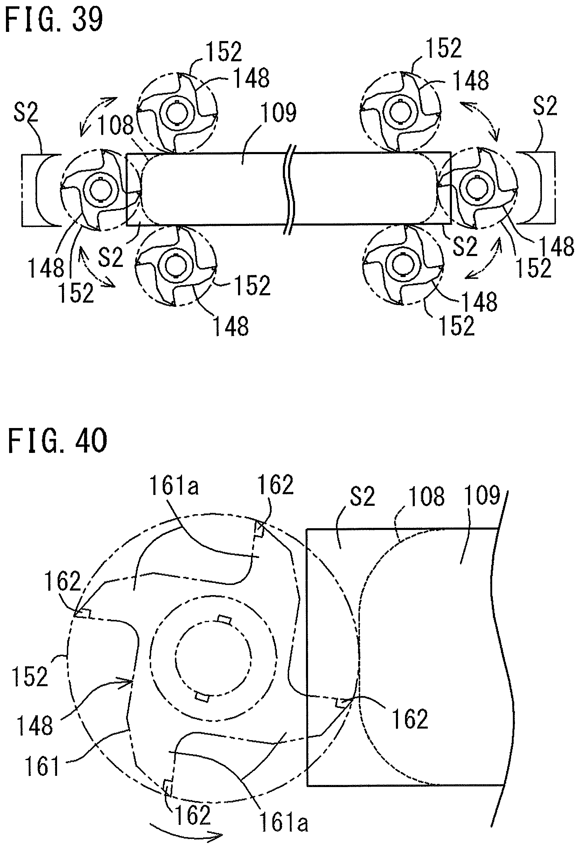

The decorative material end cut device 104 is disposed at the downstream side of the decorative material bonding device 103 in the conveying direction P (see Fig. 20). As illustrated in Fig. 30, the decorative material end cut device 104 includes a rotary cutter 128 which is rotatable about the horizontal axis and removes the extra end at the front and rear ends of the decorative material 109 bonded to the base material 108 in the conveying direction P. Furthermore, the extra end of the decorative material 109 is not completely removed in the decorative material end cut device 104, and an extra end S2 (see Fig. 39) to be removed by the second decorative-material trimming device 106 is left.

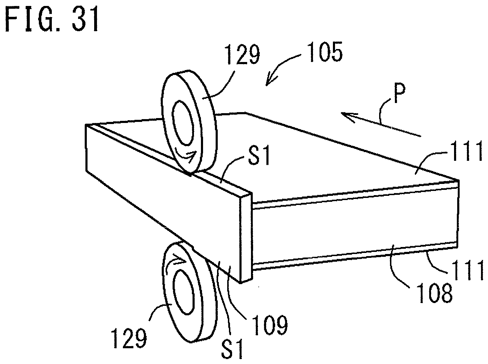

The first decorative-material trimming device 105 is disposed at the downstream side of the decorative material end cut device 104 in the conveying direction P (see Fig. 20). As illustrated in Fig. 31, the first decorative-material trimming device 105 is used to remove an extra end S1 at the upper and lower edges of the decorative material 109 bonded to the base material 108 in the longitudinal direction.

As illustrated in Fig. 32, the first decorative-material trimming device 105 includes upper and lower metallic guide rollers 131 which guide the front surface edge of the protection film 111 of the base material 108 conveyed in the predetermined conveying direction P and upper and lower trimming cutters 129 which remove the longitudinal extra end S1 of the decorative material 109 bonded to the end surface 108a of the base material 108 while the front surface edge of the protection film 111 of the base material 108 is guided by the guide rollers 131. Each trimming cutter 129 is adapted to be rotatable about the horizontal axis by the drive motor 138.

The guide roller 131 is supported by a support body 132 supporting the trimming cutter 129 so as to be rotatable about the horizontal axis. The guide roller 131 includes a disk portion 131a and a flange portion 131b which extends in a cylindrical shape in the rotation axis direction from the outer edge of the disk portion 131a and guides the front surface edge of the protection film 111 of the base material 108, and hence the guide roller is provided in a bottomed cylinder as a whole. Then, as illustrated in Fig. 33, the trimming cutter 129 is disposed so as to remove the extra end S1 of the decorative material 109 while a part thereof is located inside the flange portion 131b. That is, the trimming cutter 129 is disposed so as to remove the extra end S1 of the decorative material 109 while a part thereof is received inside the guide roller 131 as the bottomed cylinder.

Furthermore, the trimming cutter 129 removes the adhesive 110 protruding from the upper and lower portions of the upper and lower edges of the end surface 108a of the base material 108 along with the extra end S1 of the decorative material 109 (see Fig. 34). Further, as in a rotary cutter 148 to be described later, the blade tip of the trimming cutter 129 is provided in a reverse lead shape which feeds cut chips S' toward the outside of the decorative surface 109b of the decorative material 109 (that is, the opposite side to the base material 108 in the decorative material 109) (see Fig. 41).

The second decorative-material trimming device 106 is disposed at the downstream side of the first decorative-material trimming device 105 in the conveying direction P (see Fig. 20). As illustrated in Fig. 35, the second decorative-material trimming device 106 is used to perform a chamfering process by removing the extra end S2 (see Fig. 39) at the front and rear ends of the decorative material 109 bonded to the end surface 108a of the base material 108 in the conveying direction P.

As illustrated in Fig. 36, the second decorative-material trimming device 106 includes a trimming head 141 which moves along the extra end S2 of the decorative material 109. The trimming head 141 is rotatable about a horizontal shaft 143a of the slider 143. The slider 143 is movable in the horizontal direction with respect to a base 144.

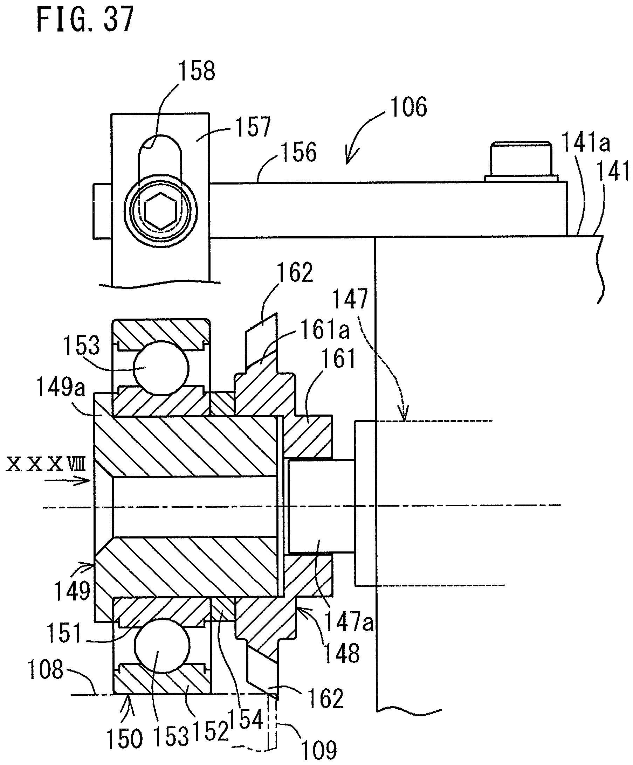

As illustrated in Figs. 37 and 38, the trimming head 141 includes a drive motor 147, the rotary cutter 148, an attachment member 149, and a bearing 150. The drive motor 147 is attached to a body 141a of the trimming head 141. Further, the drive shaft 147a of the drive motor 147 is connected to the center hole of the rotary cutter 148 through a key groove. Then, the rotary cutter 148 removes the extra end S2 of the decorative material 109 when the trimming head 141 is driven by the drive motor 147 so as to move along the extra end S2 of the decorative material 109. Further, the outer periphery of one end of the attachment member 149 is inserted into the center hole of the rotary cutter 148, and the other end thereof protrudes in the axis direction of the rotary cutter 148.

The bearing 150 is provided at the outer periphery of one end of the attachment member 149 in the axis direction. The bearing 150 includes an inner race 151, an outer race 152 (exemplified as a "guide portion"), and a plurality of balls 153 supported between the inner race 151 and the outer race 152 in a rolling manner. The inner race 151 is nipped between a front end flange 149a of the attachment member 149 and an annular spacer 154 disposed at the tip side of the rotary cutter 148. Further, the outer race 152 is supported by the attachment member 149 so as to be rotatable about the axis of the rotary cutter 148. Then, the outer race 152 rolls on the outer peripheral surface of the base material 108 when the trimming head 141 moves along the extra end S2 of the decorative material 109. Furthermore, in the embodiment, the ball bearing 150 is exemplified as the bearing, but the invention is not limited thereto. For example, a roller bearing may be employed.

A flat plate-shaped bracket 156 is attached to the body 141a of the trimming head 141. Upper ends of a plurality of (two in the drawing) flat plate-shaped press-contact pieces 157 of which the lower ends come into press-contact with the outer peripheral surface of the outer race 152 of the bearing 150 are attached to both sides of the front end of the bracket 156. Specifically, the press-contact piece 157 is fixed to the bracket 156 through the elongated hole 158 by a bolt. Then, when the bolt fixing position of the press-contact piece 157 is adjusted, the position thereof can be adjusted with respect to the outer peripheral surface of the outer race 152 of the bearing 150.

As illustrated in Fig. 40, the rotary cutter 148 includes a body 161 with a plurality of (four in the drawing) protrusion portions 161a which protrudes radially and a blade tip 162 (also referred to as a "tip") attached to the front end of each protrusion portion 161a and formed of super steel or diamond. As illustrated in Fig. 41, the blade tip 162 is provided in a reverse lead shape which feeds cut chips S' toward the outside of the decorative surface 109b of the decorative material 109 (that is, the opposite side to the base material 108 in the decorative material 109). That is, the blade tip 162 is disposed while being inclined with respect to the thickness direction of the decorative material 109 by an acute angle θ1 so that the decorative surface 109b of the decorative material 109 of the front end surface thereof is inclined in the opposite direction to the cutting direction R.

### (2) Coated-article production method

Next, a method of producing the coated article W using the coated-article production device 101 with the above-described configuration will be described. Furthermore, in the embodiment, as illustrated in Fig. 26, the decorative material 109 on the table 122 is heated to a predetermined temperature (for example, 20°C) by the heating unit 124, and the base material 108 is not heated at all before and after the base material is input to the coated-article production device 101. In this state, the heated decorative material 109 is bonded to the non-heated base material 108.

First, when the base material 108 is conveyed to the base material milling device 170 by the circulation driving of the belt conveyor 112, the front end of the base material 108 contacts the inclined surface 179 of the pressing member 171 located at the downward movement position B as illustrated in Fig. 22(b). At this time, the pressing member 171 is displaced toward the upward movement position A against the urging force of the urging member 175. Subsequently, as illustrated in Figs. 22(a) and 24(a), when the pressing member 171 is located at the upward movement position A, the front surface edge of the protection film 111 of the base material 108 is pressed by the pressing surface 178. In that state, the end surface 108a of the base material 108 is cut by the milling cutter 172.

Furthermore, in the embodiment, the base material 108 is nipped between the belt conveyor 112 and the roll 113, and the end surface 108a is cut by the milling cutter 172 while the base material is pressed downward by the pressing member 171.

Next, when the base material 108 conveyed in the conveying direction P and the decorative material 109 fed in the feeding direction Q are conveyed to the decorative material bonding device 103, the adhesive 110 is coated onto the rear surface 109a of the decorative material 109 by the coating nozzle 120 as illustrated in Fig. 26. Subsequently, the rear surface 109a of the decorative material 109 having the adhesive 110 coated thereon is pressed against the end surface 108a of the base material 108 by the pressing roller 126 so that both materials 108 and 109 are bonded to each other.

Subsequently, when the base material 108 and the decorative material 109 are conveyed to the decorative material end cut device 104, the extra end at the front and rear ends of the decorative material 109 in the conveying direction P is removed by the rotary cutter 128 (see Fig. 30).

Next, when the base material 108 and the decorative material 109 are conveyed to the first decorative-material trimming device 105, the extra end S1 of the decorative material 109 is removed by the trimming cutter 129 while the front surface edge of the protection film 111 of the base material 108 is guided by the guide roller 131 as illustrated in Fig. 32. At this time, the adhesive 110 protruding toward the rear surface 109a of the decorative material 109 is removed along with the extra end S1 of the decorative material 109 (see Fig. 34).

Subsequently, when the base material 108 and the decorative material 109 are conveyed to the second decorative-material trimming device 106, the trimming head 141 moves along the extra end S2 at the front end of the decorative material 109 in the conveying direction P, and moves along the extra end S2 at the rear end of the decorative material 109 in the conveying direction P (see Fig. 39). During the movement of the trimming head 141, the rotary cutter 148 removes the extra end S2 of the decorative material 109 while the outer race 152 of the bearing 150 rolls on the outer peripheral surface of the base material 108. At this time, the adhesive 110 protruding toward the rear surface 109a of the decorative material 109 is removed along with the extra end S2 of the decorative material 109. As a result, the coated article W (see Fig. 35) can be obtained by chamfering the decorative material 109 in response to the outer diameter shape of the substrate 108.

### (3) Effect of Embodiment

According to the first decorative-material trimming device 105 of the embodiment, the first decorative-material trimming device includes the guide roller 131 which guides the front surface edge of the base material 108 conveyed in the predetermined conveying direction P and the rotatable trimming cutter 129 which removes the longitudinal extra end S1 of the decorative material 109 bonded to the end surface 108a of the base material 108 while the front surface edge of the base material 108 is guided by the guide roller 131. Then, the guide roller 131 includes the disk portion 131a and the flange portion 131b which extends in a cylindrical shape from the outer periphery of the disk portion 131a and guides the front surface edge of the base material 108, and the trimming cutter 129 is disposed so as to remove the longitudinal extra end S1 of the decorative material 109 while a part thereof is located inside the flange portion 131b. Accordingly, the extra end S1 of the decorative material 109 is removed by the trimming cutter 129 while the front surface edge of the base material 108 (that is, the front surface edge portion of the base material 108) is guided by the guide roller 131. For that reason, even when a load applied to the base material 108 increases due to the long term use of the trimming cutter 129, the base material 108 is not easily deformed. Thus, it is possible to highly precisely remove the longitudinal extra end S1 of the decorative material 109.

Further, in the embodiment, the protection film 111 is stuck to the front surface of the base material 108. Accordingly, the longitudinal extra end S1 of the decorative material 109 can be removed while the floating of the protection film 111 is suppressed. As a result, degradation in appearance of the coated article W can be suppressed.

Further, according to the base material milling device 170 of the embodiment, the base material milling device includes the pressing member 171 that presses the front surface edge of the protection film 111 stuck to the front surface 108b of the base material 108 conveyed in the predetermined conveying direction P and the rotatable milling cutter 172 which cuts the end surface 108a of the base material 108 while the front surface edge of the protection film 111 is pressed by the pressing member 171. Then, the end surface 108a of the base material 108 is cut by the milling cutter 172 while the front surface edge of the protection film 111 is pressed by the pressing member 171. Accordingly, the end surface 108a of the base material 108 can be cut while the floating of the protection film 111 is suppressed. As a result, it is possible to suppress foreign materials such as cut chips from intruding into a gap between the protection film 111 and the front surface 108b of the base material 108 and to suppress the adhesive 110 from being transferred to the front surface of the base material 108 in the bonding step of bonding the base material 108 and the decorative material 109 as the subsequent step. Thus, degradation in appearance of the coated article W can be suppressed.

Further, in the embodiment, the pressing member 171 is supported by the support body 173 so as to be movable in the up and down direction and is urged in a direction of pressing the front surface edge of the protection film 111 by the urging member 175 provided in the support body 173. Accordingly, it is possible to more reliably press the front surface edge of the protection film 111 by the pressing member 171 with a simple structure.

Further, in the embodiment, the pressing member 171 includes the pressing surface 178 which presses the front surface edge of the protection film 111 and the inclined surface 179 which is obliquely inclined upward in a direction from the pressing surface 178 toward the upstream side of the base material 108 in the predetermined conveying direction P. Accordingly, when the base material 108 conveyed in the predetermined conveying direction P contacts the inclined surface 179, the pressing member 171 is displaced against the urging force of the urging member 175 and the pressing surface 178 is guided to the front surface edge of the protection film 111.

Further, according to the decorative material bonding device 103 of the embodiment, the decorative material bonding device includes the coating unit 117 which coats the adhesive 110 onto the rear surface 109a of the decorative material 109 fed toward the end surface 108a of the base material 108 conveyed in the predetermined conveying direction P and the pressing unit 118 which presses the rear surface 109a of the decorative material 109 having the adhesive coated thereon by the coating unit 117 against the end surface 108a of the base material 108. Accordingly, the gap between the coating unit 117 and the pressing unit 118 is comparatively shortened, and hence the time from the coating of the adhesive to the bonding of the base material 108 and the decorative material 109 is shortened. As a result, it is possible to bond the base material 108 and the decorative material 109 while suppressing an increase in processing cost without any precise temperature management for the base material 108.

Particularly, in the embodiment, there is no need to heat the base material 108 by the guide portion 114 (see Fig. 26). Thus, a comparatively long guide portion exhibiting an effective guide function can be employed as the guide portion 114. On the contrary, in the configuration of the related art in which the base material is heated by the guide portion, it is difficult to employ a long guide portion which is easily deformed by the heating.

Further, in the embodiment, since the coating unit 117 coats the adhesive 110 onto the rear surface 109a of the decorative material 109 at the coating width h3 larger than the height h1 of the end surface 108a of the base material 108, the base material 108 and the decorative material 109 can be reliably bonded to each other even when the decorative material 109 having a comparatively thin thickness (for example, a thickness of 0.5 mm or less) is employed. Further, since it is possible to suppress the adhesive 110 from being transferred to the front surface of the base material 108, it is possible to easily remove the extra portion of the adhesive 110 in the subsequent step. On the contrary, in the related art in which the adhesive is coated onto the end surface of the base material so as to bond the base material and the decorative material to each other, the adhesive is easily transferred to the front surface of the base material and the extra end of the adhesive is not easily removed in the subsequent step.

Further, in the embodiment, the coating unit 117 includes the coating nozzle 120 with the slit-shaped coating port 120a coating the adhesive 110 and the pressing roller 121 facing the coating nozzle 120 with the decorative material 109 interposed therebetween and pressing the decorative material 109 toward the coating nozzle 120. Accordingly, the coating unit 117 can be decreased in size. Thus, the gap between the coating unit 117 and the pressing unit 118 is further shortened, and hence the adhesiveness of the base material 108 and the decorative material 109 can be further improved.

Further, according to the second decorative-material trimming device 106 of the embodiment, the second decorative-material trimming device includes the trimming head 141 which moves along the extra end S2 of the decorative material 109, and the trimming head 141 includes the drive motor 147, the rotary cutter 148 which is connected to the drive shaft 147a of the drive motor 147 and removes the extra end S2 of the decorative material 109, the attachment member 149 that is attached to the axis of the rotary cutter 148, and the outer race 152 of the bearing 150 which rolls on the base material 108 while being supported by the attachment member 149 so as to be rotatable about the axis of the rotary cutter 148. Accordingly, when the trimming head 141 moves along the extra end S2 of the decorative material 109, the rotary cutter 148 removes the extra end S2 of the decorative material 109 while the outer race 152 of the bearing 150 rolls on the base material 108 so that the decorative material 109 is chamfered. Then, since the outer race 152 of the bearing 150 is supported by the attachment member 149 attached to the rotary cutter 148 so as to be rotatable about the axis of the rotary cutter 148, the axis of the outer race 152 of the bearing 150 is precisely positioned to the axis of the rotary cutter 148. As a result, the extra end S2 of the decorative material 109 can be precisely removed to be chamfered while the tracing deviation of the outer race 152 of the bearing 150 with respect to the base material 108 is suppressed. Particularly, according to the embodiment, the extra end S2 of the decorative material 109 can be precisely removed to be chamfered even when the extra end S2 of the decorative material 109 is provided in a reverse tapered shape.

Further, in the embodiment, the trimming head 141 includes the press-contact piece 157 which comes into press-contact with the outer peripheral surface of the outer race 152 of the bearing 150. Since the press-contact piece 157 comes into press-contact with the outer peripheral surface of the outer race 152 of the bearing 150, it is possible to prevent the co-rotation of the outer race 152 of the bearing 150 with the rotary cutter 148 and to prevent foreign materials such as cut chips from adhering to the outer peripheral surface of the outer race 152 of the bearing 150.

Further, in the embodiment, the rotary cutter 148 of the second decorative-material trimming device 106 includes the reverse lead blade tip 162 which feeds cut chips toward the outside of the decorative surface 109b of the decorative material 109. Accordingly, it is possible to easily remove the adhesive protruding toward the rear surface 109a of the decorative material 109 and to suppress the generation of burr when the rotary cutter 148 removes the extra end S2 of the decorative material 109. Further, in the embodiment, since the blade tip of the trimming cutter 129 of the first decorative-material trimming device 105 is provided in a reverse lead shape, the operation and the effect are substantially similar to those of the rotary cutter 148.

Furthermore, the invention is not limited to the above-described embodiment, and various modifications can be made within the scope of the invention as defined in the appended claims. That is, in the above-described embodiment, the guide roller 131 which is supported so as to be rotatable about the horizontal axis is exemplified, but the invention is not limited thereto. For example, a guide roller which is supported so as to be rotatable about the axis inclined with respect to the horizontal axis may be used. In this case, the flange portion 131b generally extends in a tapered cylindrical shape from the outer periphery of the disk portion 131a.

Further, in the above-described embodiment, the disk portion 131a of the guide roller 131 may be a spoked disk portion with a hole. Further, the guide roller 131 may be formed of a material such as resin other than metal.

Further, in the above-described embodiment, a case is described in which the protection film 111 is laminated on the front surface 108b of the base material 108 and the front surface edge of the protection film 111 is guided by the guide roller 131, but the invention is not limited thereto. For example, the front surface edge of the base material 108 may be guided by the guide roller 131 while the protection film 111 is not laminated on the front surface 108b of the base material 108.

Further, in the above-described embodiment, a spring is exemplified as the urging member 175 urging the pressing member 171, but the invention is not limited thereto. For example, an urging member provided as an elastic body such as rubber and sponge or an urging member provided as a fluid mechanism such as a cylinder may be employed.

Further, in the above-described embodiment, the pressing member 171 formed of a material such as resin cuttable by the milling cutter 172 is exemplified, but the invention is not limited thereto. For example, a metallic or ceramic pressing member that is not cuttable by the milling cutter 172 may be used.

Further, in the above-described embodiment, the outer race 152 of the bearing 150 is exemplified as the guide portion rolling on the substrate 108, but the invention is not limited thereto. For example, a rotation roller supported by the attachment member 149 so as to be rotatable about the axis of the rotary cutter 148 may be employed as the guide portion. Further, for example, as illustrated in Fig. 42, annular adaptors 164a, 164b, and 164c attached to the outer race 152 of the bearing 150 may be employed as the guide portion. In this case, for example, when the annular adaptors 164a, 164b, and 164c having different outer diameters d1, d2, and d3 are prepared, a suitable annular adaptor can be selected in response to the degradation state of the blade tip 162 of the rotary cutter 148.

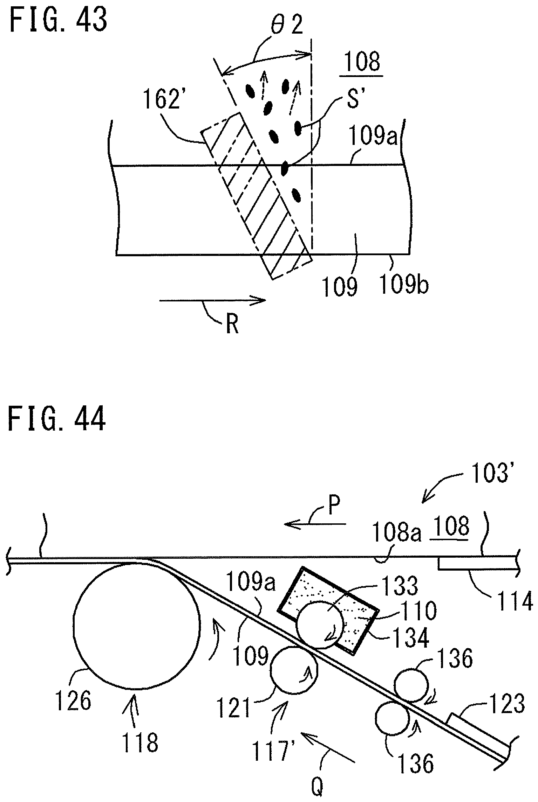

Further, in the above-described embodiment, the rotary cutter 148 with the reverse lead blade tip 162 feeding cut chips toward the outside of the decorative surface 109b of the decorative material 109 is exemplified, but the invention is not limited thereto. For example, as illustrated in Fig. 43, a rotary cutter may include a normal lead blade tip 162' feeding cut chips S' toward the inside of the decorative surface 109b of the decorative material 109 (that is, toward the base material 108). In this case, the blade tip 162' is generally disposed while being inclined with respect to the thickness direction of the decorative material 109 at an acute angle θ2 so that the rear surface 109a of the decorative material 109 of the front end surface thereof is inclined in the opposite direction to the cutting direction R.

Further, in the above-described embodiment, the coating unit 117 with the coating nozzle 120 coating the adhesive 110 onto the rear surface 109a of the decorative material 109 is exemplified, but the invention is not limited thereto. For example, as illustrated in Fig. 44, a coating unit 117' with a coating roller 133 coating the adhesive 110 onto the rear surface 109a of the decorative material 109 may be provided. In this case, the coating roller 133 is generally disposed inside a storage chamber 134 storing the adhesive 110 therein.

Further, in the above-described embodiment, the pressing unit 118 with the rotatable pressing roller 126 pressing the decorative material 109 against the end surface 108a of the base material 108 is exemplified, but the invention is not limited thereto. For example, a pressing unit with a fixed guide pressing the decorative material 109 against the end surface 108a of the base material 108 may be provided instead of or in addition to the pressing roller 126.

Further, in the above-described embodiment, the conveying unit 102 with the belt conveyor 112 conveying the base material 108 in the conveying direction P is exemplified, but the invention is not limited thereto. For example, a conveying unit with another conveyor such as a roller conveyor and a chain conveyor or a conveying unit with a robot hand conveying the base material in the conveying direction may be employed.

Further, in the above-described embodiment, the feeding unit feeding the decorative material 109 in the feeding direction Q by the coating nozzle 120 (or the coating roller 133) and the pressing roller 121 is provided, but the invention is not limited thereto. For example, as illustrated in Fig. 44, a feeding unit with a rotatable supply roller 136 nipping and feeding the decorative material 109 in the feeding direction Q may be provided separately from the coating unit 117.

Further, in the above-described embodiment, the adhesive 110 is coated onto the rear surface 109a of the decorative material 109 at the coating width h3 (the coating height h3) larger than the height h1 of the end surface 108a of the base material 108, but the invention is not limited thereto. For example, the adhesive 110 may be coated onto the rear surface 109a of the decorative material 109 at a coating width smaller than the height h1 of the end surface 108a of the base material 108.

Further, in the above-described embodiment, the adhesive 110 is coated onto the rear surface 109a of the heated decorative material 109, but the invention is not limited thereto. For example, when the non-heated decorative material 109 has a comparatively high temperature (for example, about 20°C) in summer or the like, the adhesive 110 may be coated onto the rear surface 109a of the decorative material 109 without forcedly heating the decorative material 109. Further, in the above-described embodiment, the decorative material 109 is bonded to the end surface 108a of the non-heated base material 108, but the invention is not limited thereto. For example, the decorative material 109 may be bonded to the end surface 108a of the heated base material 108.

Further, in the above-described embodiment, the decorative material 109 is conveyed to the end cut device 104 so as to cut the end thereof and is conveyed to the first trimming device 105 so as to trim the decorative material, but the invention is not limited thereto. For example, the decorative material 109 may be conveyed to the end cut device 104 so as to cut the end thereof after the decorative material is trimmed by the first trimming device 105.

### INDUSTRIAL APPLICABILITY

The invention is widely used as a technique of performing a chamfering process by removing the extra end of the decorative material bonded to the end surface of the base material. Further, the invention is widely used as a technique of removing the longitudinal extra end of the decorative material bonded to the end surface of the base material. Particularly, the invention is suitably used as a technique of producing a coated article for a building material such as a furniture surface material, a flooring material, a wall material, a door material, a partitioning material, and a counter material.

### REFERENCE SIGNS LIST

1; coated-article production device, 6; decorative-material trimming device, 8; base material, 8a; end surface, 9; decorative material, 9b; decorative surface, 41; trimming head, 47; drive motor, 48; rotary cutter, 49; attachment member, 52; outer race, 57; press-contact piece, 62; blade tip, 64a to 64c; annular adaptor, S; extra end, 101; coated-article production device, 103, 103'; decorative material bonding device, 105; first decorative-material trimming device, 108; base material, 108a; end surface, 108b; front surface, 109; decorative material, 111; protection film, 129; trimming cutter, 131; guide roller, 131b; flange portion, P; predetermined conveying direction, S1; extra end, W; coated article.

## Claims

1. A decorative-material trimming device (6) for performing a chamfering process by removing an extra end (5) of a decorative material (9) bonded to an end surface (8a) of a base material (8), comprising:
a trimming head (41) moving along the extra end (S) of the decorative material (9),
wherein the trimming head (41) includes a drive motor (47), a rotary cutter (48) connected to a drive shaft (47a) of the drive motor (47) and removing the extra end (S) of the decorative material (9), an attachment member (49) attached to the axis of the rotary cutter (48), and a guide portion (52) rolling on the base material (8) while being supported by the attachment member (49) so as to be rotatable about the axis of the rotary cutter (48),
**characterized in that**
the trimming head (41) includes an adjustable press-contact piece (57) coming into press-contact with an outer peripheral surface of the guide portion (52) such that the position of the press-contact piece (57) is adjusted with respect to the outer peripheral surface of the guide portion (52).

2. The decorative-material trimming device (6) according to claim 1,
wherein the rotary cutter (48) includes a blade tip (62) for feeding cut chips toward the outside of a decorative surface of the decorative material (9).

3. A coated-article production device (101) for producing a coated article by bonding a decorative material (109) to an end surface (108a) of a base material (108), comprising:
a decorative material bonding device (103, 103) bonding the decorative material (109) to the end surface (108a) of the base material (108); and
the decorative-material trimming device according to claim 1 or 2.

4. The coated-article production device (101) according to claim 3, further comprising:
another decorative-material trimming device (105) removing a longitudinal extra end (S1) of the decorative material (109) bonded to the end surface (108a) of the base material (108),
wherein the another decorative-material trimming device (129) includes
a guide roller (131) guiding a front surface edge of the base material (108) conveyed in a predetermined conveying direction (P), and
a rotatable trimming cutter (129) for removing the longitudinal extra end (S1) of the decorative material (109) bonded to the end surface (108a) of the base material (108) in case the front surface edge of the base material (108) is guided by the guide roller (131), and
wherein the guide roller (131) includes a disk portion (131a) and a flange portion (131b) extending in a cylindrical shape from the outer periphery of the disk portion (131a) and guiding the front surface edge of the base material (108), and the trimming cutter (129) is disposed so as to remove the longitudinal extra end (S1) of the decorative material (109) while a part thereof is located inside the flange portion (131b).

5. The coated-article production device (101) according to claim 4,
wherein a protection film (111) is stuck to a front surface (108b) of the base material (108).

6. A coated-article production method of producing a coated article by bonding a decorative material (109) to an end surface (108a) of a base material (108), comprising:
a decorative material bonding step of bonding the decorative material (109) to the end surface (108a) of the base material (108); and
a decorative material trimming step of performing a chamfering process by removing an extra end (S) of the decorative material (109) bonded to the end surface (108a) of the base material (108) using the decorative-material trimming device according to claim 1 or 2.

## Patentansprüche

1. Dekormaterialtrimmvorrichtung (6) zum Ausführen eines Entgratprozesses durch Entfernen eines zusätzlichen Endes (5) eines Dekormaterials (9), das mit einer Endfläche (8a) eines Basismaterials (8) verbunden ist, mit:
einem Trimmkopf (41), der sich entlang des zusätzlichen Endes (S) des Dekormaterials (9) bewegt,
wobei der Trimmkopf (41) einen Antriebsmotor (47), eine Drehschneideinrichtung (48), die mit einer Antriebswelle (47a) des Antriebsmotors (47) verbunden ist und zum Entfernen des zusätzlichen Endes (S) des Dekormaterials (9) dient, ein Anbringungsbauteil (49), das an der Achse der Drehschneideinrichtung (48) angebracht ist, und einen Führungsabschnitt (52) aufweist, der auf dem Basismaterial (8) rollt, während er durch das Anbringungsbauteil (49) gestützt wird, um um die Achse der Drehschneideinrichtung (48) drehbar zu sein,
**dadurch gekennzeichnet, dass**
der Trimmkopf (41) ein einstellbares Druckkontaktteil (57) aufweist, das mit einer Außenumfangsfläche des Führungsabschnitts (52) derart in Druckkontakt kommt, dass die Position des Druckkontaktteils (57) in Bezug auf die Außenumfangsfläche des Führungsabschnitts (52) eingestellt wird.

2. Dekormaterialtrimmvorrichtung (6) nach Anspruch 1,
wobei die Drehschneideinrichtung (48) eine Schneidenspitze (62) zum Fördern von Zerspanungsspänen in Richtung der Außenseite einer Dekorfläche des Dekormaterials (9) aufweist.

3. Herstellungsvorrichtung (101) für einen beschichteten Artikel zum Herstellen eines beschichteten Artikels durch Verbinden eines Dekormaterials (109) mit einer Endfläche (108a) eines Basismaterials (108), mit:
einer Dekormaterialverbindungsvorrichtung (103, 103), die zum Verbinden des Dekormaterials (109) mit der Endfläche (108a) des Basismaterials (108) dient; und
die Dekormaterialtrimmvorrichtung nach Anspruch 1 oder 2.

4. Herstellungsvorrichtung (101) für einen beschichteten Artikel nach Anspruch 3, die des Weiteren Folgendes aufweist:
eine weitere Dekormaterialtrimmvorrichtung (105) zum Entfernen eines zusätzlichen Längsendes (S1) des Dekormaterials (109), das mit der Endfläche (108a) des Basismaterials (108) verbunden ist,
wobei die weitere Dekormaterialtrimmvorrichtung (129) Folgendes aufweist:
eine Führungswalze (131), die einen vorderen Flächenrand des Basismaterials (108) führt, das in einer vorbestimmten Förderrichtung (P) gefördert wird, und
eine drehbare Trimmschneideinrichtung (129) zum Entfernen des zusätzlichen Längsendes (S1) des Dekormaterials (103), das mit der Endfläche (108a) des Basismaterials (108) verbunden ist, in dem Fall, in dem der vordere Flächenrand des Basismaterials (108) durch die Führungswalze (131) geführt wird, und
wobei die Führungswalze (131) einen Scheibenabschnitt (131a) und einen Flanschabschnitt (131b) aufweist, der sich in einer zylindrischen Form von dem Außenumfang des Scheibenabschnitts (131a) erstreckt und den vorderen Flächenrand des Basismaterials (108) führt, und die Trimmschneideinrichtung (129) angeordnet ist, um das zusätzliche Längsende (S1) des Dekormaterials (109) zu entfernen, während ein Teil davon innerhalb des Flanschabschnitts (131b) angeordnet ist.

5. Herstellungsvorrichtung (101) für einen beschichteten Artikel nach Anspruch 4,
wobei ein Schutzfilm (111) an eine vordere Fläche (108b) des Basismaterials (108) gefügt ist.

6. Herstellungsverfahren für einen beschichteten Artikel zum Herstellen eines beschichteten Artikels durch Verbinden eines Dekormaterials (109) mit einer Endfläche (108a) eines Basismaterials (108), mit:
einem Dekormaterialverbindungsschritt zum Verbinden des Dekormaterials (109) mit der Endfläche (108a) des Basismaterials (108); und
einem Dekormaterialtrimmschritt zum Ausführen eines Entgratprozesses durch Entfernen eines zusätzlichen Endes (S) des Dekormaterials (109), das mit der Endfläche (108a) des Basismaterials (108) verbunden ist, mittels der Dekormaterialtrimmvorrichtung nach Anspruch 1 oder 2.

## Revendications

1. Dispositif de coupe de matériau décoratif (6) pour réaliser un processus de chanfreinage en retirant une extrémité supplémentaire (5) d'un matériau décoratif (9) relié à une surface d'extrémité (8a) d'un matériau de base (8) comprenant :
une tête de coupe (41) se déplaçant le long d'une extrémité supplémentaire (S) du matériau décoratif (9),
dans lequel la tête de coupe (41) comprend un moteur d'entraînement (47), un dispositif de coupe rotatif (48) raccordé à un arbre d'entraînement (47a) du moteur d'entraînement (47) et retirant l'extrémité supplémentaire (S) du matériau décoratif (9), un élément de fixation (49) fixé à l'axe du dispositif de coupe rotatif (48), et une partie de guidage (52) roulant sur le matériau de base (8) tout en étant supportée par l'élément de fixation (49) afin de pouvoir tourner autour de l'axe du dispositif de coupe rotatif (48), **caractérisé en ce que** :
la tête de coupe (41) comprend une pièce de contact par pression ajustable (57) venant en contact par pression avec une surface périphérique externe de la partie de guidage (52) de sorte que la position de la pièce de contact par pression (57) est ajustée par rapport à la surface périphérique externe de la partie de guidage (52).

2. Dispositif de coupe de matériau décoratif (6) selon la revendication 1,
dans lequel le dispositif de coupe rotatif (48) comprend une pointe de lame (62) pour amener des copeaux coupés vers l'extérieur d'une surface décorative du matériau décoratif (9) .

3. Dispositif de production d'article revêtu (101) pour produire un article revêtu en reliant un matériau décoratif (109) à une surface d'extrémité (108a) d'un matériau de base (108), comprenant :
un dispositif de liaison de matériau décoratif (103, 103) reliant le matériau décoratif (109) à la surface d'extrémité (108a) du matériau de base (108) ; et
le dispositif de coupe de matériau décoratif selon la revendication 1 ou 2.

4. Dispositif de production d'article revêtu (101) selon la revendication 3, comprenant en outre :
un autre dispositif de coupe de matériau décoratif (105) retirant une extrémité supplémentaire longitudinale (S1) du matériau décoratif (109) relié à la surface d'extrémité (108a) du matériau de base (108),
dans lequel l'autre dispositif de coupe de matériau décoratif (129) comprend :
un rouleau de guidage (131) guidant un bord de surface avant du matériau de base (108) transporté dans une direction de transport (P) prédéterminée, et
un dispositif de coupe rotatif (129) pour retirer l'extrémité supplémentaire longitudinale (S1) du matériau décoratif (109) relié à la surface d'extrémité (108a) du matériau de base (108) dans le cas dans lequel le bord de surface avant du matériau de base (108) est guidé par le rouleau de guidage (131), et
dans lequel le rouleau de guidage (131) comprend une partie de disque (131a) et une partie de bride (131b) s'étendant selon une forme cylindrique à partir de la périphérie externe de la partie de disque (131a) et guidant le bord de surface avant du matériau de base (108) et le dispositif de coupe (129) est disposé afin de retirer l'extrémité supplémentaire longitudinale (S1) du matériau décoratif (109) alors qu'une partie de ce dernier est positionnée à l'intérieur de la partie de bride (131b).

5. Dispositif de production d'article revêtu (101) selon la revendication 4,
dans lequel un film de protection (111) est collé à une surface avant (108b) du matériau de base (108).

6. Procédé de production d'article revêtu pour produire un article revêtu en reliant un matériau décoratif (109) à une surface d'extrémité (108a) d'un matériau de base (108), comprenant :
une étape de liaison de matériau décoratif pour relier le matériau décoratif (109) à la surface d'extrémité (108a) du matériau de base (108) ; et
une étape de coupe de matériau décoratif pour réaliser un processus de chanfreinage en retirant une extrémité supplémentaire (S) du matériau décoratif (109) relié à la surface d'extrémité (108a) du matériau de base (108) en utilisant le dispositif de coupe de matériau décoratif selon la revendication 1 ou 2.
